(19) Europäisches Patentamt / European Patent Office / Office européen des brevets

(11) **EP 4 442 172 A1**

(12) **EUROPEAN PATENT APPLICATION**
published in accordance with Art. 153(4) EPC

(43) Date of publication:
**09.10.2024 Bulletin 2024/41**

(21) Application number: **21966507.2**

(22) Date of filing: **13.12.2021**

(51) International Patent Classification (IPC):
*A47J 31/06* (2006.01)   *A47J 31/46* (2006.01)
*A47J 31/40* (2006.01)   *A47J 31/44* (2006.01)
*A47J 31/52* (2006.01)

(52) Cooperative Patent Classification (CPC):
**A47J 31/06; A47J 31/40; A47J 31/44; A47J 31/46; A47J 31/52**

(86) International application number:
**PCT/KR2021/018839**

(87) International publication number:
**WO 2023/101081 (08.06.2023 Gazette 2023/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.12.2021 KR 20210171541**

(71) Applicant: **LG Electronics Inc.**
**Yeongdeungpo-gu**
**Seoul 07336 (KR)**

(72) Inventors:
• **CHOI, Seung-Yeon**
  **Seoul 08592 (KR)**
• **NAM, Hyeunsik**
  **Seoul 08592 (KR)**
• **MOON, Hyunwook**
  **Seoul 08592 (KR)**
• **YANG, Jungkeun**
  **Seoul 08592 (KR)**

(74) Representative: **Vossius & Partner**
**Patentanwälte Rechtsanwälte mbB**
**Siebertstrasse 3**
**81675 München (DE)**

(54) **COFFEE MAKER AND CONTROL METHOD THEREFOR**

(57)    A coffee maker and a control method therefor are disclosed. The disclosed coffee maker controls a dripper valve module to be closed in a first water supply section corresponding to a pre-wetting process so as to close an extraction hole, and controls the dripper valve module to be opened in a second water supply section corresponding to a coffee extraction process so as to open the extraction hole. Accordingly, a coffee drip process similar to a hand drip operation can be implemented.

[FIG. 16]

## Description

### [Technical Field]

The disclosure relates to a coffee maker that extracts coffee from coffee beans or coffee powder and a control method therefor.

### [Background Art]

Recently, many consumers are making and drinking coffee directly at home or work in various ways.

Among the methods of producing coffee, a hand drip method is a method of placing roasted coffee powder in a dripper equipped with a filter, pouring water into the coffee powder, and extracting the coffee through the bottom of the dripper where extraction holes are formed. The hand drip method includes a pre-wetting process and a coffee extraction process.

The pre-wetting process is also called blooming, pre-infusion, etc., and is a process of pouring a small amount of water into the coffee powder and waiting for a certain period of time before performing the coffee extraction process. Through the pre-wetting process, water is uniformly spread in the coffee powder in advance, and the carbon gas contained in the coffee powder is discharged. The coffee extraction process involves pouring a large amount of water into coffee powder to extract coffee. Then, during the pre-wetting process and coffee extraction process, the user pours water into the coffee powder in a concentric circle or spiral shape.

Meanwhile, prior technologies for extracting coffee in a manner similar to the hand drip method have been disclosed.

Republic of Korea Registered Patent No. 10-1324817 discloses a coffee hand drip device. The coffee hand drip device described above injects a certain amount of water into the coffee powder in the drip unit and rotates the drip unit so that the water comes into uniform contact with the coffee powder. In addition, a flow control valve, which controls the opening degree of the extraction hole of the drip unit, operates passively according to the amount of injected water to control the coffee extraction speed.

Republic of Korea Registered Patent No. 10-1570162 discloses a dripper that may adjust the coffee extraction time. The dripper is equipped with a spring module for setting the coffee extraction time, and when the extraction time has elapsed, the drain valve opens the lower opening of the extraction container.

However, the above-described conventional technologies do not implement the pre-wetting process and coffee extraction process that occur sequentially in the coffee drip process. In particular, there is a disadvantage in that the coffee cannot be extracted smoothly because the pre-wetting process cannot proceed and the carbon gas contained in the coffee powder cannot be discharged. In addition, the above-mentioned conventional technologies only dispense water in a straight line, and may not dispense water in a spiral form, similar to the hand drip method.

### [DISCLOSURE]

### [Technical Problem]

An object of the disclosure is to provide a coffee maker that may extract coffee similar to a hand drip operation and a control method thereof.

In addition, an object of the disclosure is to provide a coffee maker that may implement a pre-wetting process during a hand drip operation and a control method thereof.

In addition, an object of the disclosure is to provide a coffee maker that may remove the bitter taste contained in extracted coffee and a control method thereof.

In addition, an object of the disclosure is to provide a coffee maker that may supply water to coffee powder similar to a hand drip operation and a control method thereof.

In addition, an object of the disclosure is to provide a coffee maker that may extract coffee with optimal taste and aroma and a control method thereof.

The objects of the disclosure are not limited to the objects mentioned above, and other objects and advantages of the disclosure that are not mentioned may be understood through the following description, and may be understood more clearly by the embodiments of the disclosure.

### [Technical Solution]

A coffee maker and control method therefor according to an embodiment of the disclosure may perform a pre-wetting process by closing the extraction hole formed on the lower surface of a dripper, and perform a coffee extraction process by opening the extraction hole.

In particular, in the coffee maker and control method therefor according to an embodiment of the disclosure, the extraction hole may be closed by controlling the dripper valve module to a closed state in a first water supply section corresponding to the pre-wetting process, and the extraction hole may be opened by controlling the dripper valve module to an open state in a second water supply section corresponding to the coffee extraction process. Accordingly, a coffee drip process similar to a hand drip operation may be implemented.

In addition, a coffee maker and control method therefor according to an embodiment of the disclosure may close the extraction hole after the coffee extraction process is completed. Therefore, the bitter taste may be removed from the extracted coffee, and the extracted coffee may not fall to the bottom.

In addition, a coffee maker according to an embodiment of the disclosure may perform a first operation of discharging water and a second operation of stopping (or idling) discharging water in each water supply section. Therefore, water may be supplied with coffee powder similar in the hand drip process.

In addition, a coffee maker according to an embodiment of the disclosure may control a water outlet nozzle to spirally move water between the center and edge of the coffee powder received in the dripper. Therefore, water may be uniformly supplied to the coffee powder, and water may be supplied to the coffee powder similar in the hand drip process.

In addition, a coffee maker according to an embodiment of the disclosure may move the water outlet nozzle in a spiral manner by controlling the axial rotation of the first and second ring gears that are stacked and arranged. Therefore, spiral movement of the water outlet nozzle may be implemented simply and efficiently.

In addition a coffee maker according to an embodiment of the disclosure may comprise a dripper that receives coffee powder and includes an extraction hole formed on a lower surface for extracting coffee from the coffee powder, a dripper valve module that operates in an open state to open the extraction hole or a closed state to close the extraction hole, and a water outlet module that performs an operation of supplying water to the coffee powder. In this case, the water outlet module may perform a water supply operation in each of first and second water supply sections that are sequential. In addition, in the first water supply section, the dripper valve module may operate in the closed state, and in the second water supply section, the dripper valve module may operate in the open state.

In addition, at an end point of the second water supply section, the dripper valve module may operate in the closed state.

In addition, the dripper valve module may include a dripper base that is rotatably connected to the fixed lower surface of the dripper in an axial direction of the extraction hole and includes a connection hole connected to the extraction hole, and a dripper cap that moves in an upward-downward direction inside the extraction hole and includes a second screw formed on a lower portion of an outer surface. In this case, a first screw that engages with a second screw may be formed on an inner surface of the connection hole, the first screw may rotate by an axis rotation of the dripper base, and the second screw may be unscrewed or screwed by the rotation of the first screw, so that the dripper cap may move in the upward-downward direction of the extraction hole, and the extraction hole may be opened or closed by moving in the upward-downward direction of the extraction hole.

In addition, in each of the first and second water supply sections, the water outlet module may perform one or more water supply operations, the water supply operation of the water outlet module may include first and second operations performed sequentially. In this case, the first operation of the water outlet module may include an operation of the water outlet module to dispense water, and the second operation of the water outlet module may include an operation of the water outlet module to stop discharging the water.

In addition, the coffee powder is roasted coffee powder, in each of the one or more water supply operations of the water outlet module performed in the first water supply section, a performance time of the second operation of the water outlet module may be inversely proportional to the elapsed time.

In addition, in each of the one or more water supply operations of the water outlet module performed in the second water supply section, the performance time of the second operation of the water outlet module may be inversely proportional to a particle size of the coffee powder.

In addition, the water outlet module may include a first rotation member that has a penetrated interior, a second rotation member that is disposed above the first rotation member and has a penetrated interior, a water outlet nozzle that discharges water from an internal space defined by the penetrated interior of the first rotation member and the penetrated interior of the second rotation member, and a water outlet nozzle moving part that moves in the internal space based on the rotation of each of the first and second rotation members and is coupled to the water outlet nozzle. In this case, the water outlet nozzle moving part may spirally move the water outlet nozzle between a first side of the internal space corresponding to a center of an inlet of the dripper and a second side of the internal space corresponding to an edge of the inlet of the dripper.

In addition, before the coffee powder is received in the dripper, the water outlet nozzle moving part may be disposed at a start position adjacent to the second side of the internal space, before the first water supply section starts, the water outlet nozzle moving part may move the water outlet nozzle to the first side of the internal space, after the second water supply section ends, the water outlet nozzle moving part may be disposed at the start position.

In addition, at a start point of a first operation in which the water outlet nozzle discharges the water, the water outlet nozzle may be disposed on the first side of the internal space, in the first operation of the water outlet nozzle, the water outlet nozzle may move spirally from a first side direction of the internal space to a second side direction of the internal space and then spirally move to the first side of the internal space.

In addition, at a start point of a first operation in which the water outlet nozzle discharges the water, the water outlet nozzle may be disposed on the second side of the internal space, in the first operation of the water outlet nozzle, the water outlet nozzle may move spirally from the second side of the internal space to the first side of the internal space and then spirally move to the second side of the internal space.

In addition, at a start point of a first operation in which the water outlet nozzle discharges the water, the water outlet nozzle may be disposed on the first side of the internal space, in the first operation of the water outlet nozzle, the water outlet nozzle may move spirally from the first side of the internal space to the second side of the internal space, in a second operation in which the water outlet nozzle stops discharging the water, the water outlet nozzle may move spirally from the second side of the internal space to the first side of the internal space.

In addition, the water outlet nozzle moving part may be coupled with the first rotation member at a first point of the first rotation member, contact at a first point of the second rotation member so as to be able to pivot. In addition, the water outlet nozzle moving part may rotate about the first point of the first rotation member while revolving around the first side of the internal space based on the rotation of each of the first and second rotation members, and the water outlet nozzle may move spirally based on the revolution and rotation of the water outlet nozzle moving part.

In addition, the water outlet nozzle moving part may include a hinge that is coupled at the first point of the first rotation member, a first arm that extends from the hinge in a first side direction of the internal space and is coupled to the water outlet nozzle, and a second arm that is formed to extend opposite to the first arm about the hinge and pivots in contact with the first point of the second rotation member. In this case, the water outlet nozzle moving part may revolve based on the rotations of the first and second rotation members, a rotation of the second arm may be adjusted based on a difference between a rotation speed of the first rotation member and a rotation speed of the second rotation member, so that the water outlet nozzle moving part may rotate around the first point of the first rotation member.

In addition, in a time period in which a rotation speed of the second rotation member is greater than a rotation speed of the first rotation member, the water outlet nozzle moving part may spirally move the water outlet nozzle from the first side of the internal space to the second side of the internal space. In addition, in a time period in which the rotation speed of the first rotation member is greater than the rotation speed of the second rotation member, the water outlet nozzle moving part may spirally move the water outlet nozzle from the second side of the internal space to the first side of the internal space.

In addition, a rotation speed of each of the first and second rotation members may be set based on a radius of the coffee powder contained in the dripper.

In addition, in a first operation in which the water outlet nozzle discharges the water, the first and second rotation members may rotate in a first direction, a rotation speed of the second rotation member may be greater than a rotational speed of the first rotation member by a first preset speed difference value. In this case, the water outlet nozzle moving part may revolve in the first direction based on the first speed difference value, rotate in the first direction, and spirally move the water outlet nozzle from the first side of the internal space to the second side of the internal space.

In addition, in a second time period after the first time period among the time period in which the first operation is performed, the rotation speed of the second rotation member may be smaller than the rotation speed of the first rotation member by a second preset speed difference value. In this case, the water outlet nozzle moving part may revolve in the first direction based on the second speed difference value and rotate in a second direction opposite to the first direction, and spirally move the water outlet nozzle from the second side of the internal space to the first side of the internal space.

In addition, a coffee maker according to another embodiment of the disclosure may comprise a dripper that receives coffee powder and includes an extraction hole formed on a lower surface for extracting coffee from the coffee powder, a dripper valve module that operates in an open state to open the extraction hole or a closed state to close the extraction hole, and a water outlet module that performs an operation of supplying water to the coffee powder. In this case, an opening degree of the extraction hole may correspond to a level of the open state of the dripper valve module, the level of the open state of the dripper valve module may be set based on a particle size of the coffee powder.

In addition, a control method of a coffee maker according to still another embodiment of the disclosure may comprise controlling a dripper valve module to close an extraction hole formed in a lower surface of a dripper in which coffee powder is received, controlling a water outlet module to supply water to the coffee powder in a first water supply section, controlling the dripper valve module to open the extraction hole, controlling the water outlet module to supply the water to the coffee powder in a second water supply section, and controlling the dripper valve module to close the extraction hole.

**[Advantageous Effect]**

According to the disclosure, coffee with optimal taste and aroma may be extracted by performing a coffee drip process similar to the hand drip process.

In addition, according to the disclosure, by performing the first water supply section corresponding to the pre-wetting, the flavor of the coffee may be improved by discharging the carbon gas contained in the coffee powder.

In addition, according to the disclosure, convenience of use may be increased by closing the extraction hole after the coffee extraction process is completed to prevent coffee from falling to the floor.

In addition, according to the disclosure, various coffee recipes may be implemented by simply and efficiently controlling the spiral movement of the water outlet nozzle based on the axial rotation of the first and second actuators.

In addition to the above-described effects, specific effects of the disclosure are described below while explaining specific details for implementing the disclosure.

**[Description of Drawings]**

FIG. 1 is a diagram illustrating a perspective view of a coffee maker according to an embodiment of the disclosure.

FIG. 2 is a diagram illustrating a perspective view of a coffee maker with some cases omitted, according to an embodiment of the disclosure.

FIG. 3 is a diagram illustrating an exploded perspective view of a water outlet module according to an embodiment of the disclosure.

FIG. 4 is a diagram illustrating a front perspective view of a water outlet module according to an embodiment of the disclosure.

FIG. 5 is a diagram illustrating a rear perspective view of a water outlet module according to an embodiment of the disclosure.

FIG. 6 is a diagram in which some components of the water outlet module are omitted from the rear perspective view in FIG. 5.

FIGS. 7 to 9 are diagrams for explaining the concept of the rotation operation of a water outlet nozzle moving part according to an embodiment of the disclosure.

FIG. 10 is a diagram for explaining the concept of a spiral movement of a water outlet module according to an embodiment of the disclosure.

FIG. 11 is a diagram illustrating an exploded perspective view of a dripper module according to an embodiment of the disclosure.

FIG. 12 is a diagram illustrating a perspective view of a first part of a dripper module being detached from a second part of the dripper module, according to an embodiment of the disclosure.

FIG. 13 is a diagram illustrating a cross-sectional perspective view of a dripper module according to an embodiment of the disclosure.

FIG. 14 is a diagram for explaining a coupling relationship of some components of a dripper module according to an embodiment of the disclosure.

FIG. 15 is a block diagram illustrating a connection relationship between components of a coffee maker according to an embodiment of the disclosure.

FIG. 16 is a flowchart of a control method of a coffee maker according to an embodiment of the disclosure.

FIG. 17 is a diagram illustrating an area where coffee powder falls inside a dripper, according to an embodiment of the disclosure.

FIG. 18 is a diagram for explaining a water supply operation in a water outlet nozzle over time, according to an embodiment of the disclosure.

FIG. 19 is a diagram for explaining a concept of spiral movement of a water outlet nozzle in a water outlet section, according to an embodiment of the disclosure.

FIGS. 20 and 21 are diagrams for explaining a water supply operation in a water outlet nozzle according to an elapsed time after roasting and a particle size of coffee powder, according to an embodiment of the disclosure.

**[Detailed Description of Exemplary Embodiments]**

The above-described objectives, features and advantages are specifically described with reference to the attached drawings hereunder such that one having ordinary skill in the art to which the disclosure pertains may easily implement the technical spirit of the disclosure. In describing the disclosure, detailed description of known technologies in relation to the disclosure is omitted if it is deemed to make the gist of the disclosure unnecessarily vague. Below, preferred embodiments of the disclosure are specifically described with reference to the attached drawings. Throughout the drawings, identical reference numerals denote identical or similar components.

It will be understood that, although the terms first, second, and other terms may be used herein to describe various components, these components should not be limited by these terms. These terms are only used to distinguish one component from another, and a first component may be a second component unless stated to the contrary.

Throughout the disclosure, each component may be provided as a single one or a plurality of ones, unless explicitly stated to the contrary.

As used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

Throughout the specification, unless otherwise stated, "A and/or B" means A, B or A and B. Unless otherwise stated, "C to D" means "C or more and D or less".

Throughout the specification, "upward-downward direction" means the upward-downward direction of the coffee maker in a state in which the coffee maker is installed for daily use. "Leftward-rightward direction" means a direction perpendicular to the upward-downward direction, and frontward-rearward direction means a direction perpendicular to both the upward-downward direction and the leftward-rightward direction. "Bilateral direction" or "lateral direction" has the same meaning as leftward-rightward direction, and these terms may be used interchangeably in the specification.

In the specification, whole beans should be understood to include roasted coffee beans, not coffee beans harvested from coffee trees. There may be several types of roasted coffee beans depending on the degree of roasting. For example, dark roasted coffee may dissolve its coffee components in water more easily than light roasted coffee. However, in the specification, coffee beans are used to mean roasted coffee beans to be used for coffee extraction regardless of the degree of roasting.

In addition, in the specification, a coffee maker refers to a device that mixes ground coffee, i.e., coffee powder, with water and then dissolves the coffee ingredients in water to extract liquid coffee or coffee liquid. Coffee liquid refers to water containing coffee ingredients extracted from coffee powder. Therefore, in the specification, extracting coffee liquid means dissolving coffee powder in water and extracting water containing coffee components from the coffee powder. Therefore, unless otherwise stated, coffee generally refers to coffee liquid, and coffee beans and coffee powder refer to coffee in solid form.

1. Overall structure of a coffee maker (1)

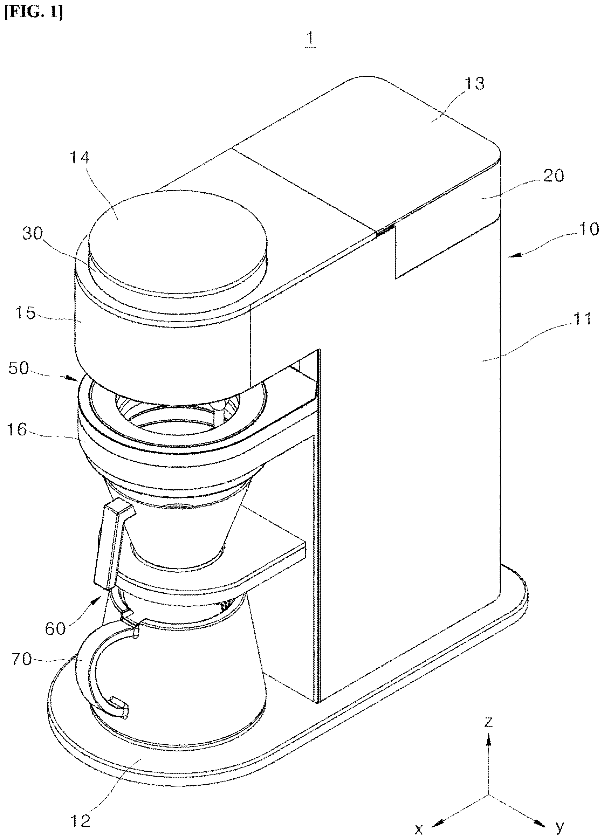

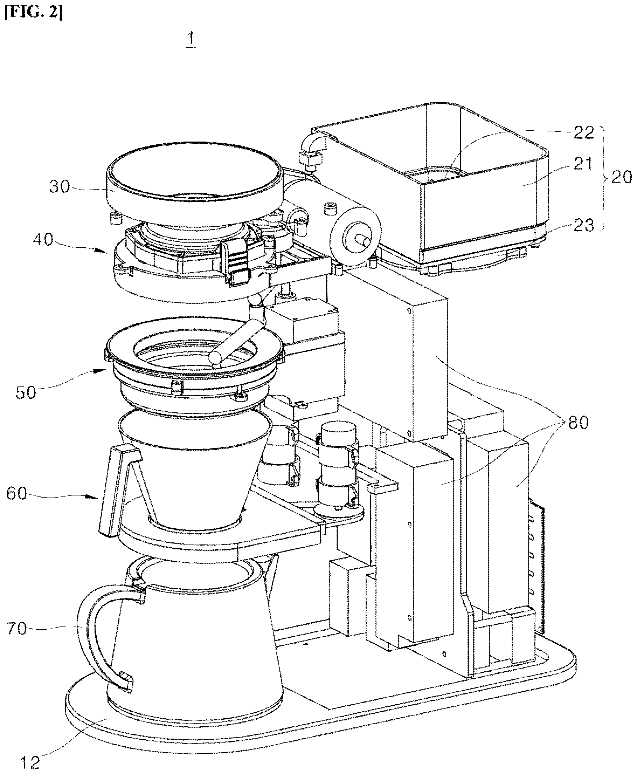

FIG. 1 is a diagram illustrating a perspective view of a coffee maker 1 according to an embodiment of the disclosure. FIG. 2 is a diagram illustrating a perspective view of the coffee maker 1 with some of a case 10 omitted, according to an embodiment of the disclosure.

In the coordinate axes shown in FIG. 1, the x-axis and -x-axis directions are expressed as forward and backward, the y-axis and -y-axis directions are expressed as the right and left, and the z-axis and -z-axis directions are expressed as upward and downward.

Referring to FIGS. 1 and 2, the coffee maker 1 may include a case 10, a water tank module 20, a hopper 30, a grinder module 40, a water outlet module 50, a dripper module 60, a coffee server 70, and a circuit board 80.

The case 10 may form the exterior of the coffee maker 1. The case 10 may have various shapes.

As an embodiment, referring to FIGS. 1 and 2, the case 10 may include a body 11, a base 12, a first cover 13, a second cover 14, a first installation part 15, and a second installation part 16.

The body 11 may provide an installation space for the components of the coffee maker 1. The base 12 may support the body 11 and the coffee server 70 may be seated thereon. The first cover 13 may cover the inlet of the water tank module 20 and protect water from the outside. The second cover 14 may cover the inlet of the hopper 30 and protect the coffee beans from the outside. The first installation part 15 may provide a space for installing a portion of the hopper 30 and the grinder module 40. The second installation part 16 may provide a space for installing the water outlet module 50.

The water tank module 20 may receive water and heat the received water. The water tank module 20 may receive water in various ways and heat water.

As an embodiment, referring to FIGS. 1 and 2, the water tank module 20 may include a water tank body 21, a heating plate 22, and a heating module 23.

The water tank body 21 has an empty internal space, and the upper inlet may be opened. As an embodiment, the water tank body 21 may have a rectangular parallelepiped shape with an open top. However, the disclosure is not limited thereto, and the water tank body 21 may have various shapes.

The water may be received in the internal space of the water tank body 21. In this case, the temperature of the water received may be room temperature water. The inlet of the water tank body 21 may be closed by the first cover 13.

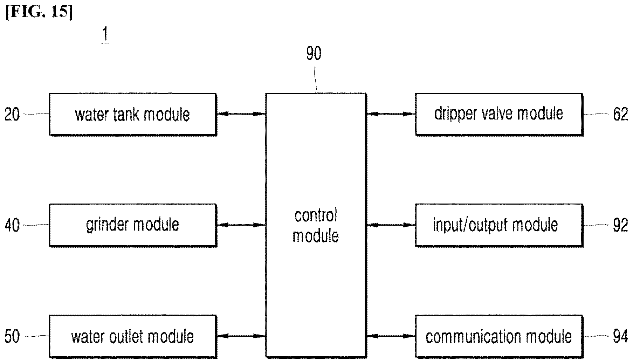

Meanwhile, although not shown in the drawing, the water tank module 20 may include a water level sensor. The water level sensor may detect the level of water received in the water tank body 21. The detected sensing value (water level value) may be transmitted to a control module 90 (FIG. 15).

The heating plate 22 may be installed on the inner lower surface of the water tank body 21. According to another embodiment, the heating plate 22 may be installed on the outer lower surface of the water tank body 21. The heating plate 22 may be made of metal. In case that the water tank body 21 has a rectangular parallelepiped shape, the heating plate 22 may have a rectangular shape. However, the disclosure is not limited thereto.

The heating module 23 may be a device installed to heat the water received in the water tank body 21. As an embodiment, the heating module 23 may heat water using an induction heating (IH) method. To this end, although not shown in the drawing, the heating module 23 may include a working coil, ferrite, aluminum shield, temperature sensor, etc.

According to the induction heating method, high-frequency power of a predetermined size is applied to the working coil to generate a magnetic field around the working coil. Based on the generated magnetic field, an eddy current is generated in an object to be heated, which is made of a metal component, that is, the heating plate 22. Based on the generated eddy current, the object to be heated, that is, water, is heated.

By heating water using induction heating, water may be heated at a high rate, and water may be heated to a desired temperature by controlling the output of the magnetic field. Therefore, according to the user's operation, water of the user's desired temperature may be generated.

Meanwhile, the heating method of the heating module 23 is not limited to the content described above, and various heating methods may be applied to the coffee maker 1.

The hopper 30 may receive coffee beans. The hopper 30 may store a sufficient amount of coffee beans and provide a certain amount of coffee beans to the grinder module 40.

The hopper 30 may have various shapes. As an embodiment, referring to FIGS. 1 and 2, the hopper 30 may generally have a funnel shape.

The grinder module 40 may generate coffee powder by grinding the coffee beans provided by the hopper 30. The grinder module 40 may be disposed below the hopper 30 and above the dripper module 60. The coffee powder generated by the grinder module 40 may be provided to the dripper module 60 by gravity and received inside the dripper module 60.

The grinder module 40 may grind coffee beans according to a preset grinding degree. The grinding degree may correspond to the particle size of the coffee powder. If the grinding degree is high, the particle size of the coffee powder may be small, and if the grinding degree is low, the particle size of the coffee powder may be large. In other words, the grinding degree may have an inverse relationship with the particle size of the coffee powder.

The grinding degree may be set in various ways depending on the coffee recipe. The grinding degree may be set by the user. For example, the coffee maker 1 may implement a plurality of coffee recipes, the user may select one of the plurality of coffee recipes, and the grinding degree may be set based on the selected coffee recipe. Alternatively, the coffee maker 1 may include a sensor (e.g., an image sensor) that detects the particle size of the coffee powder, and the grinding degree may be set based on the detected particle size of the coffee powder. In other words, the grinding degree may be automatically set without user involvement through detection of the particle size of the coffee powder.

In order to grind coffee beans, the grinder modules 40 of various structures may be applied to the coffee maker 1. For example, the grinder module 40 may include various components such as a motor, an inner burr, an outer burr, etc. A detailed structural description of the grinder module 40 will be omitted.

The water outlet module 50 may supply water to the coffee powder received in the dripper module 60. The water outlet module 50 may be disposed below the grinder module 40 and above the dripper module 60. That is, if the water outlet module 50 is disposed above the grinder module 40, the supply of water may be interrupted by the grinder module 40, so the water outlet module 50 may be disposed between the grinder module 40 and the dripper module 60. In addition, in order to naturally supply water by gravity, the water outlet module 50 may be disposed above the inlet of the dripper module 60.

The water outlet module 50 may supply water received in the water tank module 20 to the dripper module 60. The water outlet module 50 may supply room temperature water or hot water to the dripper module 60. When the heating module 23 of the water tank module 20 does not operate, the water outlet module 50 may supply room temperature water to the dripper module 60, and thus, coffee may be extracted using the hot brew method. When the heating module 23 of the water tank module 20 operates, the water outlet module 50 may supply hot water to the dripper module 60, and thus coffee may be extracted using the cold brew method.

As described later, the water outlet module 50 may provide water to the dripper module 60 in a first water supply section corresponding to the pre-wetting section and a second water supply section corresponding to the coffee extraction section, respectively. In addition, according to a preferred embodiment of the disclosure, similar to the hand drip operation, the water outlet module 50 may discharge water in a spiral shape and supply the water to the coffee powder.

The water outlet module 50 may have various structures. According to the embodiment, the water outlet module 50 may include a plurality of actuators 53 and 54, a water outlet nozzle 56, a water outlet nozzle moving part 55, etc. This will be explained in more detail below.

The dripper module 60 may be disposed below each of the grinder module 40 and the water outlet module 50. The dripper module 60 is provided in the grinder module 40 and may receive the coffee powder that has passed through the water outlet module 50, and may receive the water provided in the water outlet module 50, and may extract coffee from the water and coffee powder.

The coffee powder and water may be supplied to the receiving space of the dripper module 60 through the inlet of the dripper module 60. The outlet of the dripper module 60 is formed on the lower side of the dripper module 60, and the extracted coffee may be supplied to the coffee server 70.

The outlet of the dripper module 60 may be open or closed. In particular, by closing the outlet of the dripper module 60, the coffee maker 1 may implement the pre-wetting process among the hand drip process.

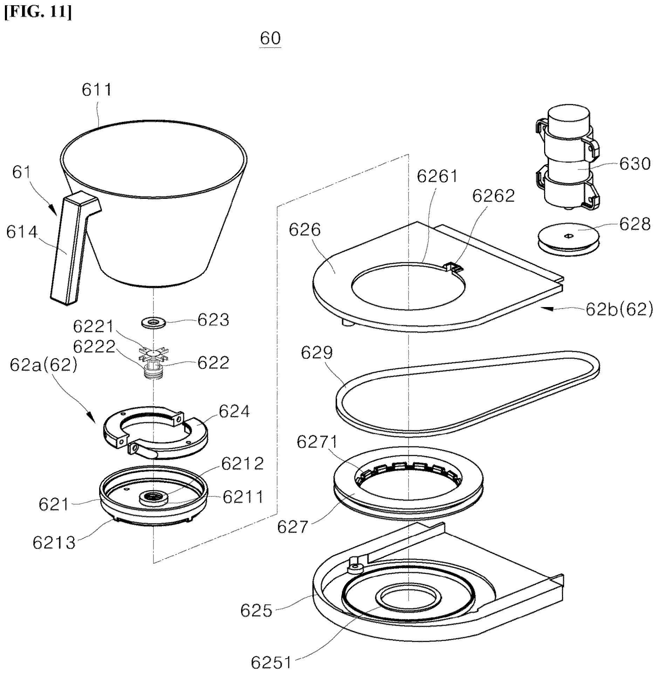

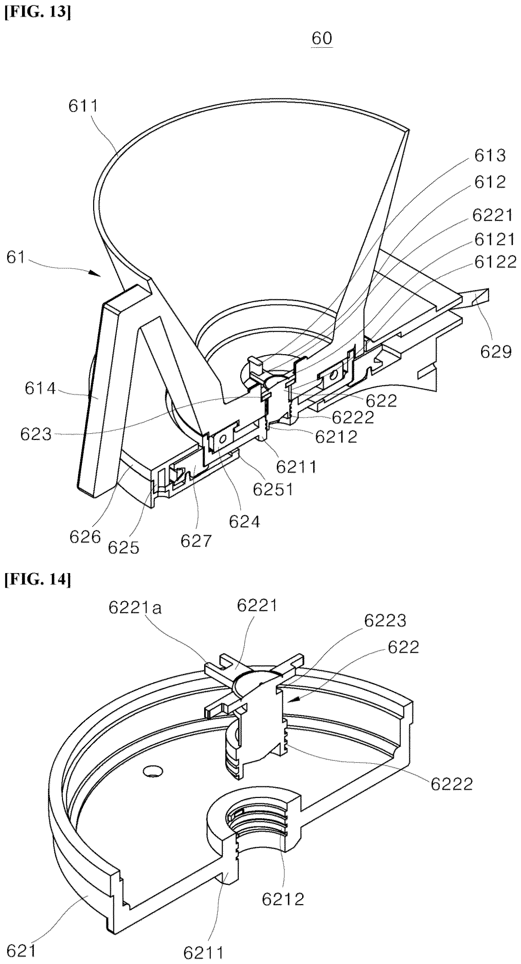

The dripper module 60 of various structures that may open and close the outlet of the dripper module 60 may be applied to the coffee maker 1. According to an embodiment, the dripper module 60 may include a dripper 61 (FIG. 11) and a dripper valve module 62 (FIG. 11). A space for receiving the coffee powder and water may be formed in the dripper 61, and an extraction hole 612 (FIG. 13) for extracting coffee may be formed on the lower surface of the dripper 61. The inlet of the dripper module 60 may correspond to a dripper inlet 611 (FIG. 11), and the outlet of the dripper module 60 may correspond to an extraction hole 612. The dripper valve module 62 may perform an operation to open and close the extraction hole 612. The structure of the dripper module 60 will be described in more detail below.

Although not illustrated in FIGS. 1 and 2, a filter (not shown) may be installed on the inner surface of the dripper module 60, that is, the inner surface of the dripper 61. The filter primarily receives the coffee powder provided from the grinder module 40 and the water provided from the water outlet module 50, and may only pass through the liquid coffee dissolved in water. The inner surface of the dripper 61 may stably support the filter.

When room temperature water is supplied from the water outlet module 50, the dripper module 60 may extract coffee using the cold brew method. Alternatively, when hot water is supplied from the water outlet module 50, the dripper module 60 may extract coffee using the hot brew method.

The coffee server 70 is detachable from the case 10, and the user may drink coffee by placing the coffee received in the coffee server 70 in a coffee container.

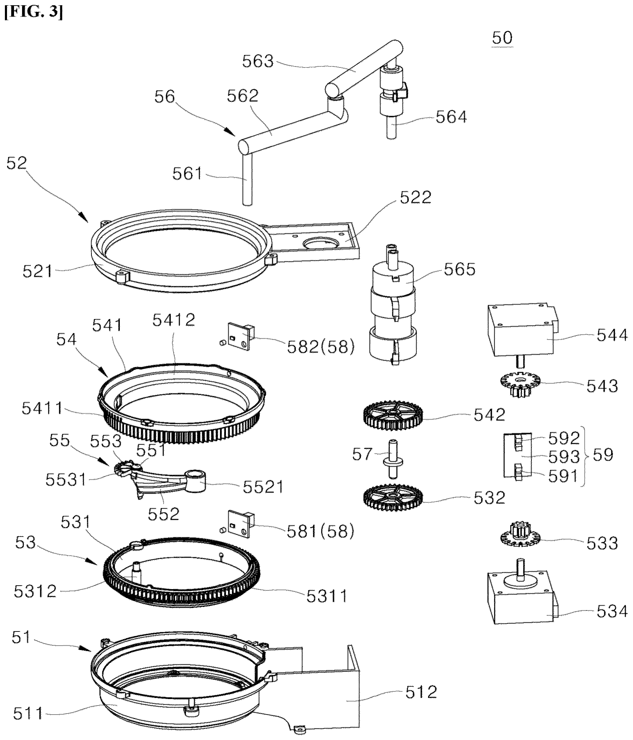

Hereinafter, with reference to FIG. 3 and the like, the structures of the water outlet module 50 and dripper module 60 will be described in more detail.

2. Structure of a water outlet module 50

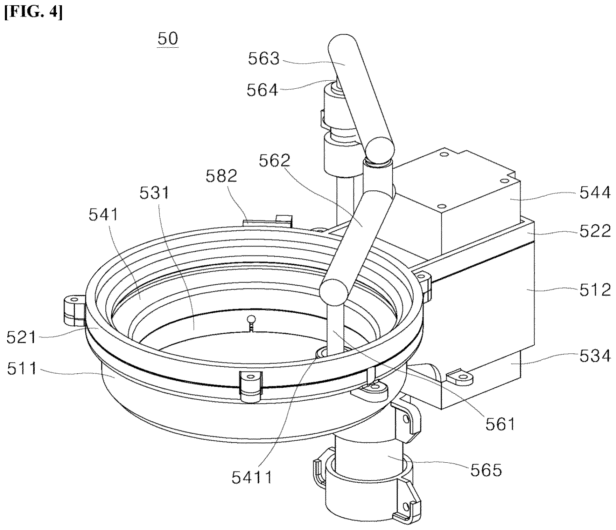

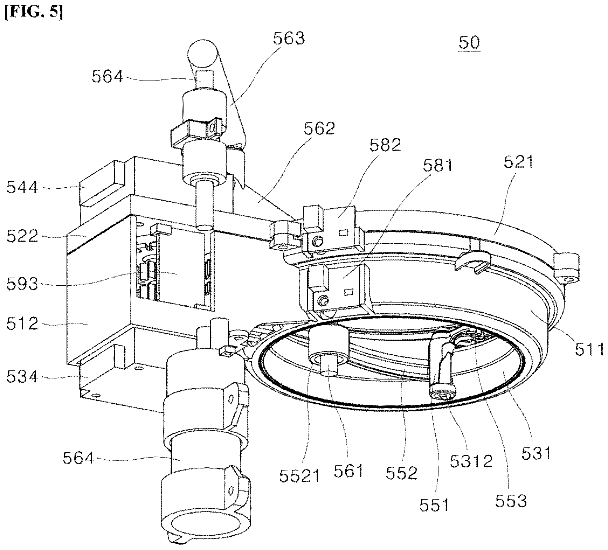

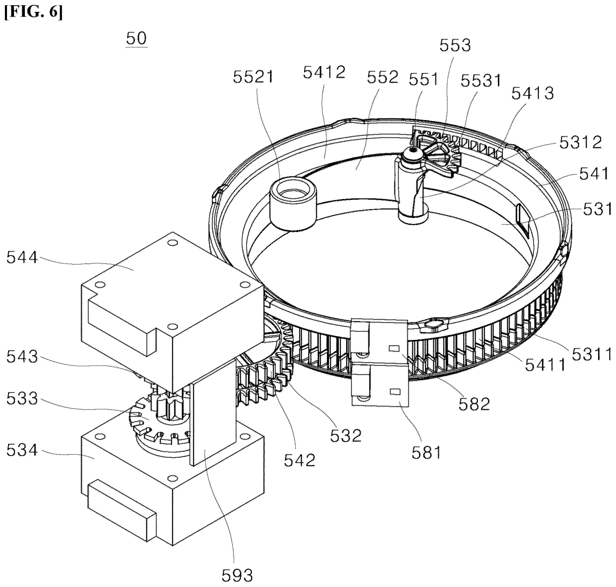

FIG. 3 is a diagram illustrating an exploded perspective view of the water outlet module 50 according to an embodiment of the disclosure. FIG. 4 is a diagram illustrating a front perspective view of the water outlet module 50 according to an embodiment of the disclosure. FIG. 5 is a diagram illustrating a rear perspective view of the water outlet module 50 according to an embodiment of the disclosure. FIG. 6 is a diagram in which some components of the water outlet module 50 are omitted from the rear perspective view in FIG. 5.

Referring to FIGS. 3 to 6, the water outlet module 50 may include a water outlet module housing 51 and 52, a first actuator 53, a second actuator 54, a water outlet nozzle 56, and a water outlet nozzle moving part 55. In addition, various sensors 58 and 59 may be installed in the water outlet module 50 to detect the operations of the first actuator 53 and second actuator 54.

The water outlet module housings 51 and 52 may be configured to include the first water outlet module housing 51 and the second water outlet module housing 52. The first actuator 53 may be configured to include a first ring gear 531, a first idler gear 532, a first driving gear 533, and a first motor 534. The second actuator 54 may be configured to include a second ring gear 541, a second idler gear 542, a second driving gear 543, and a second motor 544. The water outlet nozzle moving part 55 may be configured to include a hinge 551, a first arm 552, and a second arm 553. The water outlet nozzle 56 may be configured to include a nozzle 561, a first pipe 562, a second pipe 563, a third pipe 564, and a water pump 565.

The function of each component is explained as follows.

The water outlet module housings 51 and 52 may provide an installation space for the components constituting the water outlet module 50 and protect the components. The water outlet module housings 51 and 52 may have a penetrating internal space corresponding to the inlet of the dripper module 60, that is, the dripper inlet 611.

The first water outlet module housing 51 among the water outlet module housings 51 and 52 may form the lower side of the water outlet module housings 51 and 52, and the second water outlet module 52 among the water outlet module housings 51 and 52 may form the upper side of the water outlet module housings 51 and 52. The first water outlet module housing 51 and second water outlet module housing 52 may be coupled with each other to form the water outlet module housings 51 and 52.

The first part 511 of the first water outlet module housing 51 may have a pillar shape with a penetrated interior. In particular, the first part 511 of the first water outlet module housing 51 may have a cylindrical shape with a penetrated interior to correspond to the shapes of the first ring gear 531 and second ring gear 541. The first ring gear 531, second ring gear 541, and water outlet nozzle moving part 55 may be installed in the inner space of the first part 511 of the first water outlet module housing 51.

A Hall sensor 58 may be installed on the outer surface of the first part 511 of the first water outlet module housing 51. As will be described later, the first ring gear 531 and second ring gear 541 may rotate, that is, revolve around the central axis formed in the upward-downward direction of the first part 511 of the first water outlet module housing 51. Accordingly, the Hall sensor 58 may be installed in the first part 511 of the first water outlet module housing 51 to detect the revolution positions of the first ring gear 531 and second ring gear 541.

The Hall sensor 58 may include a first Hall sensor 581 for detecting the rotational position of the first ring gear 531, and a second Hall sensor 582 for detecting the rotational position of the second ring gear 541. Referring to FIG. 5, the first Hall sensor 581 may be installed on the lower side of the outer surface of the first part 511 of the first water outlet module housing 51, and the second Hall sensor 582 may be installed on the upper side of the outer surface of the first part 511 of the water outlet module housing 51. Although not shown in the drawing, a magnet may be installed on the outer surface of each of the first ring gear 531 and second ring gear 541, and each of the first Hall sensor 581 and second Hall sensor 582 may react with the magnet, and detect the revolution positions of the first ring gear 531 and second ring gear 541. The detected sensing value (revolution position value) may be transmitted to the control module 90.

The first part 521 of the second water outlet module housing 52 may have a penetrated interior. In particular, to correspond to the shapes of the first ring gear 531 and second ring gear 541, the first part 512 of the second water outlet module housing 52 may have a circular shape with a penetrated interior. The first part 521 of the second water outlet module housing 52 may be coupled to the upper portion of the first part 511 of the first water outlet module housing 51. By combining with the first part 521 of the second water outlet module housing 52, the first ring gear 531 and second ring gear 541 may be prevented from being separated from the first part 511 of the first water outlet module housing 51.

The second part 512 of the first water outlet module housing 51 may have a pillar shape with an empty interior. In particular, to correspond to the shapes of the first motor 534 and second motor 544, the second part 512 of the first water outlet module housing 51 may have a rectangular parallelepiped shape with an empty interior.

The second part 522 of the second water outlet module housing 52 may be coupled to the upper portion of the second part 512 of the first water outlet module housing 51. A hole for installing the rotation axis of the second motor 544 may be formed in the second part 522 of the second water outlet module housing 52. Meanwhile, although not clearly illustrated in the drawing, the lower surface of the second part 512 of the first water outlet module housing 51 may have a shape corresponding to the second part 522 of the second water extraction module housing 52. Accordingly, a hole for installing the rotation axis of the first motor 534 may also be formed on the lower surface of the second part 512 of the first water outlet module housing 51.

The second part 512 of the first water outlet module housing 51 and second part 522 of the second water outlet module housing 52 may provide an installation space for a first idler gear 532, second idler gear 542, first driving gear 533, second driving gear 543, first motor 534, second motor 544, and photo interrupter 59. The first idler gear 532, second idler gear 542, idler gear shaft 57, first driving gear 533, second driving gear 543, and photo interrupter 59 may be installed in the inner space of the coupled second part 512 of the first water outlet module housing 51 and second part 522 of the second water outlet module housing 52. The first motor 534 may be installed from the lower side of the second part 512 of the first water outlet module housing 51 through the lower surface of the second part 512 of the first water outlet module housing 51. The second motor 544 may be installed from the upper side of the second part 522 of the second water outlet module housing 52 through the upper surface of the second part 522 of the second water outlet module housing 52.

Meanwhile, the idler gear shaft 57 may be installed to connect the first idler gear 532 and second idler gear 542 in the same axial direction. The photo interrupter 59 may be installed to detect the rotational positions of the first driving gear 533 and second driving gear 543. The photo interrupter 59 may include a first photo interrupter 591, a second photo interrupter 592, and a photo interrupter substrate 593. The first photo interrupter 591 may detect the rotational position of the first driving gear 533 and may be installed adjacent to the first driving gear 533. The second photo interrupter 592 may detect the rotational position of the second driving gear 543 and may be installed adjacent to the second driving gear 543. The first photo interrupter 591 and second photo interrupter 592 may be installed on a photo interrupter substrate 593. The detected sensing value (i.e., driving gear rotation position value) may be transmitted to the control module 90.

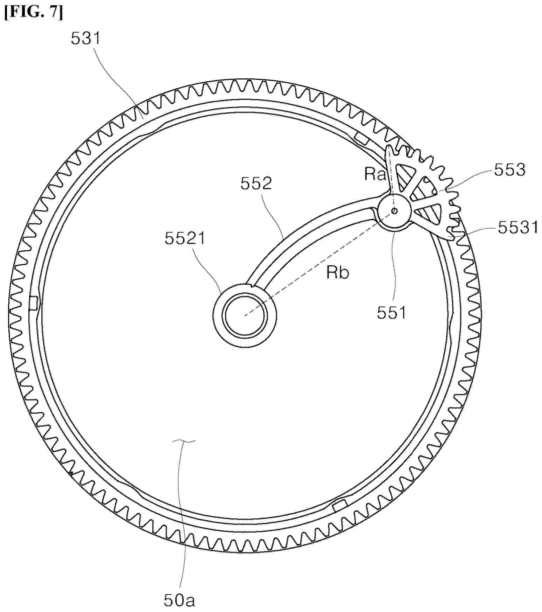

The water outlet nozzle 56 may perform the function of supplying water received in the water tank module 20 to the dripper module 60. That is, the water outlet nozzle 56 may discharge water toward the dripper inlet 611 in the internal space defined by the water outlet module housings 51 and 52, more precisely, in the internal space 50a (FIG. 7, etc.) defined by the penetrated interior of the first ring gear 531 and penetrated interior of the second ring gear 541. As mentioned above, the water outlet nozzle 56 may include a nozzle 561, a first pipe 562, a second pipe 563, a third pipe 564, and a water pump 565.

The water pump 565 may pump water received in the water tank module 20. The water pump 565 may include an inlet and outlet provided on the upper surface. The water received in the water tank module 20 may be provided to the inlet of the water pump 565, and the outlet of the water pump 565 may be connected to the third pipe 564. In order to efficiently provide the water received in the water tank module 20 to the water pump 565, the water pump 565 may be disposed below the water tank module 20.

The third pipe 564 may provide water pumped from the outlet of the water pump 565 to the second pipe 563, and the second pipe 563 may be connected to the first pipe 562. The first pipe 562 and second pipe 563 may provide a flow path for water provided by the third pipe 564. The nozzle 561 may be connected to the first pipe 562, and water flowing through the first pipe 562 may be discharged from the nozzle 561. The nozzle 561 may be arranged in the upward-downward direction. Accordingly, the water outleted from the nozzle 561 may be supplied to the coffee powder received in the dripper module 60 by gravity.

As will be described later, the nozzle 561 may move in the internal space 50a. To this end, one end of the third pipe 564 may be connected to the outlet of the water pump 565, and one end of the second pipe 563 may be connected to the other end of the third pipe 564 so as to be rotatable axially. One end of the first pipe 562 may be connected to the other end of the second pipe 563 so as to be rotatable axially, and the other end of the first pipe 562 may be connected to the nozzle 561.

The water outlet nozzle moving part 55 may be provided to be movable along a horizontal plane in the internal space 50a. By moving the water outlet nozzle moving part 55, the water outlet nozzle 56, more precisely the nozzle 561, may move in the internal space 50a. In this case, the movement of the nozzle 561 may be a spiral movement in a horizontal plane. That is, the water outlet nozzle moving part 55 may be moved spirally between the center of the internal space (i.e., the first side) corresponding to the center of the dripper inlet 611 and the edge of the internal space 50a corresponding to the edge of the dripper inlet 611 (i.e., the second side). To this end, the water outlet nozzle moving part 55 may be rotatably coupled to the nozzle 561.

In more detail, the water outlet nozzle moving part 55 may be configured to include a hinge 551, a first arm 552, and a second arm 553.

The hinge 551 may be coupled at a first point of the first ring gear 531 and may rotate in the axial direction at a first point of the first ring gear 531. The hinge 551 is generally oriented vertically and may be formed to be spaced apart from the ends of the water outlet nozzle moving part 55.

The first arm 552 may be formed to extend in a predetermined direction from the hinge 551 and may be coupled to the nozzle 561.

Specifically, the first arm 552 may be formed to extend from the hinge 551 in the first side direction of the internal space 50a. Here, the first side of the internal space 50a may correspond to the center of the internal space 50a or center of the dripper inlet 611. One end of the first arm 552 may be connected to the hinge 551, and a sleeve 5521 may be formed on the other end of the first arm 552. The nozzle 561 may be rotatably inserted into the sleeve 5521. As will be described later, the water outlet nozzle moving part 55 may perform various motions such as rotation and revolution, and accordingly, the nozzle 561 may move spirally in the internal space 50a. To this end, the nozzle 561 may be rotatably coupled to the sleeve 5521.

The second arm 553 may be formed to extend in a direction opposite to the first arm 552 with the hinge 551 as the center. That is, the second arm 553 may be formed to extend from the hinge 551 in the second side direction of the internal space 50a. In this case, the second side of the internal space 50a may correspond to the edge of the internal space 50a or edge of the dripper inlet 611. The second arm 553 may pivot in contact with the first point of the second ring gear 541. Here, the first point of the second ring gear 541 may be adjacent to the first point of the first ring gear 531 described above.

Specifically, the second arm 553 may extend in the direction in which the second ring gear 541 is disposed. One end of the second arm 553 may be connected to the hinge 551, and a pinion gear 5531 may be formed on the other end of the second arm 553. Referring to FIG. 6, an internal gear 5413 may be formed at the first point of the second ring gear 541, and the pinion gear 5531 of the second arm 553 may engage with the internal gear 5413 of the second ring gear 541. Accordingly, the second arm 553 may pivot around the hinge 551, and thus the entire water outlet nozzle moving part 55 may rotate, that is, self-rotate. A detailed explanation of this will be provided later.

Meanwhile, the second arm 553 may include a plurality of ribs or spokes disposed between the pinion gear 5531 and the hinge 551. A plurality of openings may be formed between the ribs. The ribs and openings may be formed to prevent coffee powder provided from the grinder module 40 from accumulating on the upper surface of the water outlet nozzle moving part 55.

The first actuator 53 and second actuator 54 are components installed to rotate, that is, revolve and self-rotate the water outlet nozzle moving part 55 in the internal space 50a. The water outlet nozzle 56, that is, the nozzle 561, may move spirally according to the revolution and rotation of the water outlet nozzle moving part 55. That is, the first actuator 53 and second actuator 54 may be provided to move the nozzle 561 in a spiral manner.

As mentioned above, the first actuator 53 may be configured to include the first ring gear 531, the first idler gear 532, the first driving gear 533, and the first motor 534. The second actuator 54 may be configured to include the second ring gear 541, the second idler gear 542, the second driving gear 543, and the second motor 544.

The first ring gear 531 may be disposed on the lower side of the internal space 50a. The first ring gear 531 may be disposed on the second side of the internal space 50a and may rotate around the first side of the internal space 50a. That is, the first ring gear 531 may be a first rotation member that revolves around the first side of the internal space 50a.

The first ring gear 531 may have a body that continuously extends in the circumferential direction along the second side of the internal space 50a. That is, the first ring gear 531 may have a circular shape with a penetrated interior and may surround the edge of the internal space.

A first external gear 5311 may be formed on the outer surface of the first ring gear 531. The first external gear 5311 may be composed of teeth arranged over the entire outer surface of the first ring gear 531.

A hinge coupling part 5312 may be formed at a first point on the inner surface of the first ring gear 531. The hinge coupling part 5312 may be disposed vertically. The hinge 551 may be rotatably inserted and coupled to the hinge coupling part 5312. Therefore, by combining the hinge 551 and hinge coupling part 5312, the water outlet nozzle moving part 55 may stably rotate at the first point of the first ring gear 531.

The first idler gear 532 may be disposed between the first external gear 5311 and the first driving gear 533. The first idler gear 532 may be engaged with each of the first external gear 5311 and the first driving gear 533. The first idler gear 532 may transmit the motion of the first driving gear 533 to the first external gear 5311 without changing the transmission ratio.

The first driving gear 533 may be coupled to the drive shaft of the first motor 534. The first motor 534 may provide power to rotate the first ring gear 531.

The operation of the first actuator 53 is described as follows. Under the control of the control module 90, the drive shaft of the first motor 534 may be driven at a first rotation speed. The power generated by the first motor 534 may be transmitted to the first external gear 5311 through the first driving gear 533 and first idler gear 532. As the first external gear 5311 engages with the first idler gear 532, the first ring gear 531 may rotate (revolve) around the first side of the internal space 50a.

The second ring gear 541 may be disposed on the upper side of the internal space 50a. The second ring gear 541 may be disposed on the second side of the internal space 50a and may rotate around the first side of the internal space 50a. That is, the second ring gear 541 may be a second rotation member that revolves around the first side of the internal space 50a. The second ring gear 541 may be stacked and disposed on the upper side of the first ring gear 531.

Since the second ring gear 541 is disposed on the upper surface of the first ring gear 531, the lower surface of the second ring gear 541 may move while contacting the upper surface of the first ring gear 531. That is, the upper surface of the first ring gear 531 may function as a bearing for the second ring gear 541.

The second ring gear 541 may have a body that continuously extends in the circumferential direction along the second side of the internal space 50a. That is, the second ring gear 541 may have a circular shape with a penetrated interior and may surround the edge of the internal space.

The inner and outer surfaces of the second ring gear 541 may be formed to be stepped. Accordingly, the size of the lower side of the second ring gear 541 may be smaller than the size of the upper side of the second ring gear 541.

A second external gear 5411 may be formed on the outer surface of the second ring gear 541. That is, the second external gear 5411 may be formed on the lower side of the outer surface of the second ring gear 541. The second external gear 5411 may be composed of teeth arranged over the entire outer surface of the second ring gear 541.

An internal gear 5413 may be formed at a first point on the inner surface of the second ring gear 541. That is, an internal gear 5413 may be formed on the upper side of the inner surface of the second ring gear 541. The internal gear 5413 may be composed of teeth arranged along a portion of the inner surface of the second ring gear 541. The internal gear 5413 may engage with the pinion gear 5531 of the second arm 553.

A support 5412 may be formed inside the second ring gear 541. The support 5412 may connect the upper and lower sides of the second ring gear 541. The support 5412 may be formed to extend in the first side direction of the internal space 50a. The support 5412 may generally be made of a plate-shaped member and may be formed throughout the entire inside of the second ring gear 541. The support 5412 may stably support the second arm 553 that pivots by the internal gear 5413. In addition, as will be described later, when the water outlet nozzle moving part 55 rotates and is disposed on the second side of the inner space, the entire water outlet nozzle moving part 55 may be supported evenly.

The second idler gear 542 may be disposed between the second external gear 5411 and the second driving gear 543. The second idler gear 542 may be engaged with each of the second external gear 5411 and the second driving gear 543. The second idler gear 542 may transmit the motion of the second driving gear 543 to the second external gear 5411 without changing the transmission ratio.

The second driving gear 543 may be coupled to the drive shaft of the second motor 544. The second motor 544 may provide power to rotate the second ring gear 541.

The operation of the second actuator 54 is described as follows. Under the control of the control module 90, the drive shaft of the second motor 544 may be driven at a second rotation speed. The power generated by the second motor 544 may be transmitted to the second external gear 5411 through the second driving gear 543 and second idler gear 542. As the second external gear 5411 engages with the second idler gear 542, the second ring gear 541 may rotate (revolve) around the first side of the internal space 50a. In addition, as the second ring gear 541 rotates, the internal gear 5413 may also rotate in the same direction as the rotation direction of the second ring gear 541. As the internal gear 5413 and the pinion gear 5531 engage with each other, the second arm 553 may pivot around the hinge 551.

In short, based on the operations of the first motor 534, first driving gear 533, and first idler gear 532, the first ring gear 531 may rotate in the first direction (i.e., clockwise or counterclockwise). In addition, the second ring gear 541 may rotate in the first direction based on the operations of the second motor 544, second driving gear 543, and second idler gear 542. Accordingly, the water outlet nozzle moving part 55 coupled to the first ring gear 531 at the first point of the first ring gear 531 may revolve around the first side of the internal space 50a. In addition, the second arm 553 may be pivotally contacted at the first point of the second ring gear 541, and the water outlet nozzle moving part 55 may rotate around the first point of the first ring gear 531 based on the difference in rotation speed between the first ring gear 531 and the second ring gear 541. Ultimately, the nozzle 561 coupled to the water outlet nozzle moving part 55 may move spirally based on the revolution and rotation of the water outlet nozzle moving part 55.

3. Revolution and rotation operations of the water outlet nozzle moving part 55, and spiral movement operations of the water outlet nozzle 56

In order to rotate, that is, revolve and self-rotate the water outlet nozzle moving part 55, the first ring gear 531 and second ring gear 541 may rotate in the same direction or in opposite directions. In particular, for convenience of rotation control of the water outlet nozzle moving part 55, the first ring gear 531 and second ring gear 541 may rotate in the same direction. Specifically, when both ring gears 531 and 541 rotate in opposite directions, a large relative movement between the first ring gear 531 and the second ring gear 541 occurs suddenly, and control of the revolution and rotation of the water outlet nozzle moving part 55 may be difficult. Therefore, in the embodiment described below, it is assumed that both the first ring gear 531 and the second ring gear 541 rotate in the first direction.

The revolution operation of the water outlet nozzle moving part 55 is explained as follows.

Referring to FIGS. 3, 5, and 6, the hinge 551 of the water outlet nozzle moving part 55 may be coupled to the first ring gear 531 at the hinge coupling part 5312 formed at the first point of the first ring gear 531. Accordingly, the water outlet nozzle moving part 55 may revolve based on the rotation of the first ring gear 531. Meanwhile, referring to FIG. 6, the pinion gear 5531 of the second arm 553 of the water outlet nozzle moving part 55 is in contact with the internal gear 5413 formed at the first point of the second ring gear 541. In this case, if only the first ring gear 531 rotates and the second ring gear 541 does not rotate, or the rotation speed of the first ring gear 531 and the rotation speed of the second ring gear 541 are significantly different, the engagement of the pinion gear 5531 of the second arm 553 and internal gear 5413 of the second ring gear 541 may be released and the revolution of the discharge nozzle moving part 55 may not be performed properly. Accordingly, the revolution of the water outlet nozzle moving part 55 may be performed based on the rotation of each of the first ring gear 531 and second ring gear 541. In this case, for smooth revolution of the water outlet nozzle moving part 55, the first ring gear 531 and second ring gear 541 may rotate in harmony.

The rotation operation of the water outlet nozzle moving part 55 is explained as follows.

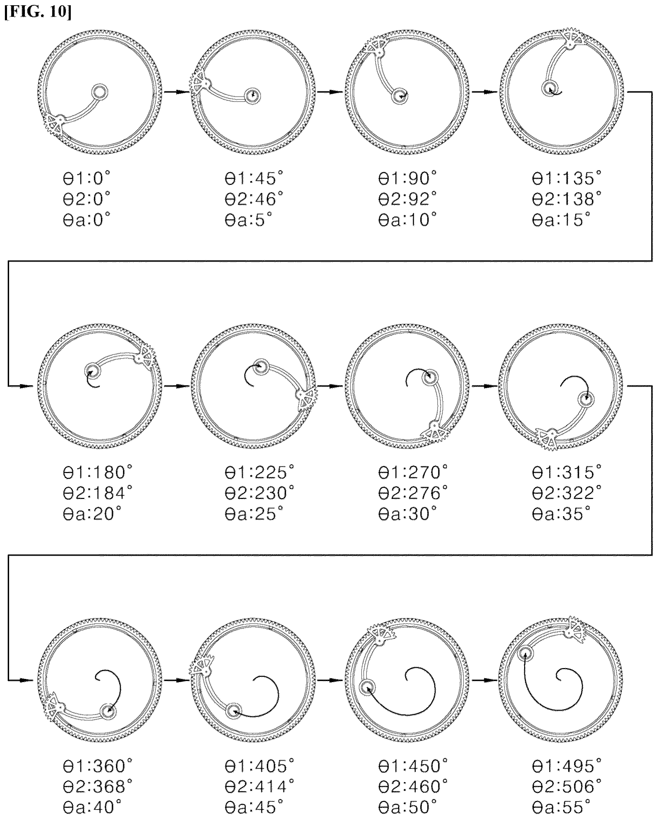

FIGS. 7 to 9 are diagrams for explaining the concept of the rotation operation of the water outlet nozzle moving part 55 according to an embodiment of the disclosure. FIG. 10 is a diagram for explaining the concept of the water extraction module 50 moving in a spiral manner, according to an embodiment of the disclosure.

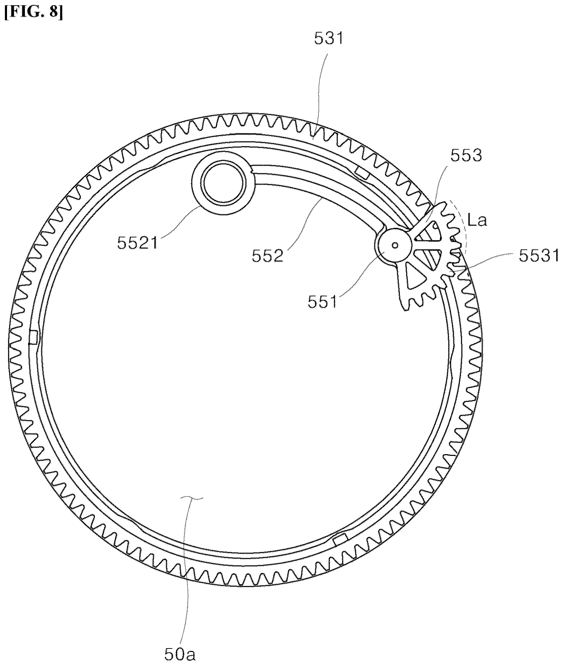

Specifically, FIGS. 7 and 8 illustrate a situation in which the first ring gear 531 and second ring gear 541 rotate clockwise (first direction) with respect to the central axis of the internal space 50a. In this case, it is assumed that the rotation speed of the second ring gear 541 is significantly greater than the rotation speed of the first ring gear 531.

Referring further to FIG. 6, the pinion gear 5531 formed on the second arm 553 engages with the internal gear 5413. As the second ring gear 541 rotates clockwise, the internal gear 5413 may also rotate clockwise. Since the rotation speed of the first ring gear 531 is smaller than the rotation speed of the second ring gear 541, the pinion gear 5531 engaging with the internal gear 5413 may pivot clockwise about the hinge 551. As the pinion gear 5531 pivots clockwise, the first arm 552 may also rotate clockwise around the hinge 551. Accordingly, the entire water outlet nozzle moving part 55 may rotate clockwise around the hinge 551.

In other words, referring to the description of FIGS. 7 and 8, by rotation of the second ring gear 541, the internal gear 5413 may pivot the pinion gear 5531 engaged therewith in a clockwise direction. Due to the pivoting of the pinion gear 5531, the second arm 553 may also rotate in the same direction as the rotation direction of the second ring gear 541, that is, clockwise. When the second arm 553 pivots, the first arm 552 formed opposite the second arm 553 may also pivot clockwise. Accordingly, the entire water outlet nozzle moving part 55 may pivot, that is, rotate around the hinge 551.

In addition, the water outlet nozzle moving part 55 may be rotatably coupled to the hinge coupling part 5312 formed at the first point of the first ring gear 531. When the first ring gear 531 rotates, the hinge coupling portion 5312 may also rotate. Therefore, when the first ring gear 531 and second ring gear 541 rotate simultaneously at different rotation speeds, the water outlet nozzle moving part 55 may rotate at the entire edge of the internal space 50a (i.e., the second side of the internal space 50a). In this case, the second arm 553 may pivot by the pivot length of the internal gear 5413. Accordingly, the rotation range or rotation angle of the water outlet nozzle moving part 55 may correspond to the pivot length or pivot angle of the internal gear 5413.

In summary, if "coupling" is understood to include "contact", the water outlet nozzle moving part 55 may be coupled with both the first ring gear 531 and the second ring gear 541. Therefore, in order to rotate the water outlet nozzle moving part 55 on the entire second side of the internal space 50a, the second ring gear 541 must rotate (revolve) relative to the first ring gear 531. For relative rotation, the motion characteristics of the first ring gear 531 and second ring gear 541, that is, rotation speed and rotation amount, may be adjusted.

Meanwhile, as mentioned above, a sleeve 5521 is formed on the first arm 552 of the water outlet nozzle moving part 55, and the nozzle 561 included in the water outlet nozzle 56 may be rotatably coupled to the sleeve 5521. Therefore, based on the revolution and rotation of the water outlet nozzle moving part 55, the nozzle 561 may move, that is, move spirally, in the internal space 50a.

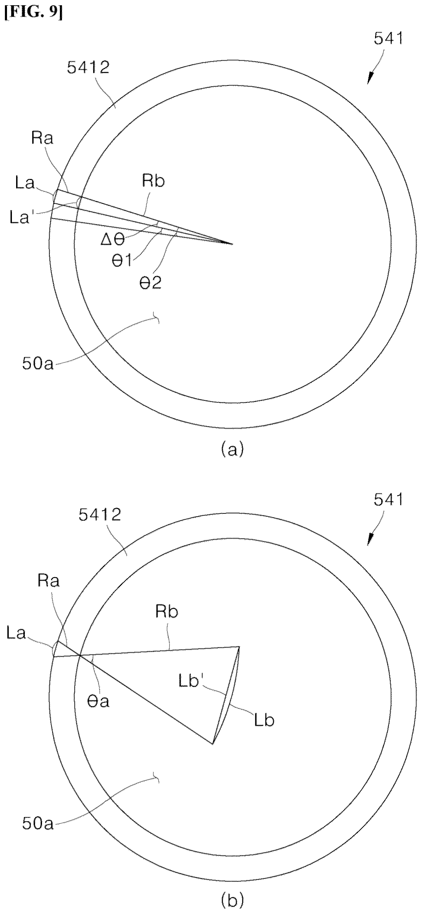

Hereinafter, with reference to FIGS. 9 and 10, the operation of the spiral movement of the water outlet nozzle 56 based on the revolution and rotation of the water outlet nozzle moving part 55 will be described in detail.

FIG. 9 is a diagram for explaining the concept of the operation in which the water outlet nozzle moving part 55 revolves and rotates in a predetermined time period. In this case, it is assumed that the first ring gear 531 and second ring gear 541 rotate clockwise (first direction), and the first rotation speed w1 of the first ring gear 531 is smaller than the second rotation speed w2 of the second ring gear 541. In addition, the length of the water outlet nozzle moving part 55 corresponds to the sum of the length Rb of the first arm 552 and length Ra of the second arm 553.

Referring to (a) in FIG. 9, since the first rotation speed w1 is smaller than the second rotation speed w2, the second rotation amount θ2 of the second ring gear 541 may be greater than the first rotation amount θ1 of the first ring gear 531. Therefore, the difference $\Delta\theta$ in the rotation amount of both ring gears 531 and 541 in a predetermined time period may be expressed as Equation 1 below.

[Equation 1]

$$\Delta\theta = \theta 2 - \theta 1$$

Due to the difference in rotation amount $\Delta\Theta$, the second arm 553, that is, the internal gear 5413, may move by La. Referring to the arc length formula and (a) in FIG. 9, the pivot length La of the internal gear 5413 may be expressed as Equation 2 below.

[Equation 2]

$$La \simeq La' = Rb \times \frac{\Delta\theta}{2\pi}$$

Here, Rb means the length of the first arm 552.
Meanwhile, due to the difference in rotation amount $\Delta\Theta$, the second arm 553, that is, the internal gear 5413, may pivot by $\ominus a$, and the water outlet nozzle moving part 55 may rotate by $\ominus a$. Referring to the arc length formula and (b) in FIG. 9, the pivot length La of the internal gear 5413 may be expressed as Equation 3 below.

[Equation 3]

$$La = Ra \times \frac{\theta a}{2\pi}$$

Here, Ra means the length of the second arm 553.
Therefore, the difference in rotation amount $\Delta\theta$ and the pivot angle $\theta a$ of the second arm 553 may be expressed as Equation 4 below.

[Equation 4]

$$\theta a = \frac{Rb}{Ra} \times \Delta\theta$$

Meanwhile, as shown in (b) in FIG. 9, the rotation length Lb of the first arm 552 due to pivot of the second arm 553 may be expressed as Equation 5 below based on the properties of an isosceles triangle.

[Equation 5]

$$Lb \simeq Lb' = 2 \times Rb \times \sin(\frac{\theta a}{2})$$

If Equation 5 is summarized in terms of the pivot angle $\theta a$ of the second arm 553, it may be expressed as Equation 6 below.

[Equation 6]

$$\theta a = 2 \times \arcsin(\frac{Lb}{2 \times Rb})$$

In this case, by combining Equation 4 and Equation 6, Equation 7 below may be derived.

[Equation 7]

$$\Delta\theta = 2 \times \frac{Ra}{Rb} \times \arcsin(\frac{Lb}{2 \times Rb})$$

Here, the length Rb of the first arm 552 and length Ra of the second arm 553 may be fixed values. Accordingly, the difference in rotation amount $\Delta\theta$ may be set to correspond to the rotation length Lb of the first arm 552. Also, the difference in rotation amount $\Delta\theta$ is related to the difference in rotation speed between the first ring gear 531 and the second ring gear 541. Accordingly, the rotation speed of each of the first ring gear 531 and second ring gear 541 may be set to correspond to the rotation length Lb of the first arm 552.
As mentioned above, the nozzle 561 may be coupled to the sleeve 5521 formed on the first arm 552, and the rotational length Lb of the first arm 552 may correspond to the rotation length of the nozzle 561. Therefore, the rotation length of the nozzle 561 may be adjusted by controlling the difference in rotation amount $\Delta\theta$ or the rotation speed of each of the first ring gear 531 and second ring gear 541. That is, the first arm 552 and second arm 553 are formed to have appropriate lengths, and by controlling the difference in rotation amount $\Delta\theta$ or the rotation speed of each of the first ring gear 531 and second ring gear 541, the spiral movement of the nozzle 561 may be adjusted.
Hereinafter, with reference to FIG. 10, an operation in which the nozzle 561 moves spirally in a specific time period based on the difference in rotation amount $\Delta\theta$ will be described in detail.
As shown in FIG. 10, the first ring gear 531 and second ring gear 541 rotate clockwise (first direction), and the water outlet nozzle moving part 55 also revolves clockwise. In addition, at the start of a specific time period, the water outlet nozzle moving part 55 is arranged in a first shape facing the center (first side) of the internal space 50a. Also, at the end point of a specific time period, the water outlet nozzle moving part 55 is arranged in a second shape adjacent to the edge (second side) of the internal space 50a.

In this case, it is assumed that the rotation angle at which the water outlet nozzle moving part 55 moves from the first shape to the second shape, that is, θa, is 55°. In addition, in order to rotate the water outlet nozzle moving part 55 by 55°, it is assumed that the second ring gear 541 rotates by 11° more than the first ring gear 531. Here, 11° corresponds to the difference in rotation amount Δθ.

For the spiral movement as shown in FIG. 10, the first ring gear 531 may rotate at a constant speed of 45° per unit time, and the second ring gear 541 may rotate at a constant speed of 46° per unit time. In this case, in unit time, the water outlet nozzle moving part 55 may rotate by 5°. Therefore, in a specific time period, the first ring gear 531 may rotate by 495°, the second ring gear 541 may rotate by 506°, and the water outlet nozzle moving part 55 may rotate by 55°. Accordingly, the nozzle 561 may move spirally from the center of the internal space 50a to the edge of the internal space 50a.

4. Structure of the dripper module 60

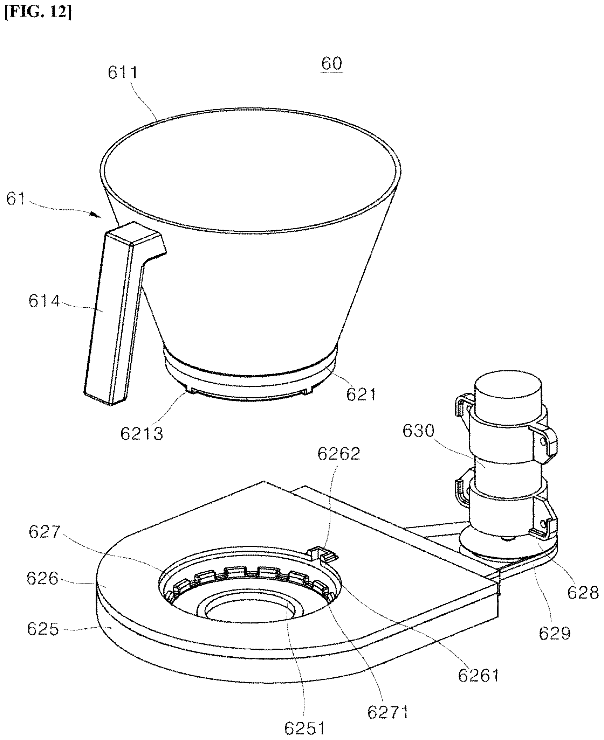

FIG. 11 is a diagram illustrating an exploded perspective view of the dripper module 60 according to an embodiment of the disclosure. FIG. 12 is a diagram illustrating a perspective view of the first part of the dripper module 60 being detached from the second part of the dripper module 60, according to an embodiment of the disclosure. FIG. 13 is a diagram illustrating a cross-sectional perspective view of the dripper module 60 according to an embodiment of the disclosure. FIG. 14 is a diagram for explaining the coupling relationship of some components of the dripper module 60 according to an embodiment of the disclosure.

Referring to FIGS. 7 to 14, the dripper module 60 may be configured to include a dripper 61 and a dripper valve module 62.

The dripper 61 may receive coffee powder provided from the grinder module 40 and may receive water provided from the water outlet module 50. The dripper 61 may include an open inlet of the dripper 61 formed on the upper side, and an outlet of the dripper 61 formed on the lower surface, that is, an extraction hole 612. As an example, the extraction hole 612 may be formed through the center of the lower surface of the dripper 61. A handle 614 that may be held by the user's hand may be formed on the outer surface of the dripper 61.

When the coffee maker 1 performs the operation of extracting coffee, the dripper 61 is fixed and may not rotate.

In order to smoothly receive coffee powder and water, the dripper inlet 611 may be formed to be relatively large and the outlet of the dripper module 60 may be formed to be relatively small. That is, the dripper 61 may have an overall shape that corresponds to the shape of the upper side of the funnel.

The extraction hole 612 may include a first extraction hole 6121 formed on the upper side of the extraction hole 612 and a second extraction hole 6122 formed on the lower side of the extraction hole 612. A portion of the upper portion of the dripper cap 622 may be disposed in the first extraction hole 6121, and a portion of the lower portion of the dripper cap 622 may be disposed in the second extraction hole 6122.

The first extraction hole 6121 may have an overall cylindrical shape. Meanwhile, according to another embodiment, the first extraction hole 6121 may have a shape corresponding to the shape of the upper side of the funnel.

Referring to FIG. 13, a plurality of guide protrusions 613 may be formed on the inner surface of the first extraction hole 6121. The guide protrusion 613 may be formed to extend from the edge toward center of the first extraction hole 6121. As will be described later, the guide protrusion 613 may be coupled to the guide member 6221 formed on the upper side of the dripper cap 622 to support the movement in the upward-downward direction of the dripper cap 622.

The dripper valve module 62 may perform an operation to open or close the extraction hole 612. To this end, the dripper valve module 62 may operate in an open state and closed state. When the dripper valve module 62 is in the open state, the extraction hole 612 may be opened. When the dripper valve module 62 is closed, the extraction hole 612 may be closed.

In addition, when the extraction hole 612 is opened, the dripper valve module 62 may adjust the opening degree of the extraction hole 612. That is, the dripper valve module 62 may adjust the level of the open state. That is, as will be described later, the level of the open state of the dripper valve module 62 may be adjusted by adjusting the height of the dripper cap 622, and the opening degree of the extraction hole 612 may be adjusted accordingly.

The dripper valve module 62 may include a first dripper valve module 62a and a second dripper valve module 62b. The first dripper valve module 62a may be coupled to the dripper 61 below the dripper 61. The second dripper valve module 62b may be connected to the case 10. Referring to FIG. 12, the dripper 61 (i.e., first part of the dripper module 60) coupled with the first dripper valve module 62a may be detachably coupled with the second dripper valve module 62b (i.e., second part of the dripper module 60).

The first dripper valve module 62a may include a dripper base 621, a dripper cap 622, a dripper sealer 623, and a dripper wing 624. The second dripper valve module 62b may include dripper supports 625 and 626, a first pulley 627, a second pulley 628, a belt 629, and a third motor 630.

The dripper base 621 may be coupled to the lower surface (i.e., bottom surface) of the dripper 61. As will be described later, the dripper base 621 may rotate about the central axis of the dripper 61 by the second dripper valve module 62b, so the dripper base 621 may be coupled to the lower surface of the dripper 61 so that it may rotate axially. That is, the dripper base 621 may be rotatably coupled to the lower surface of the dripper 61 in the axial direction of the extraction hole 612.

The dripper base 621 may have a shape corresponding to the lower surface of the dripper 61. That is, the dripper base 621 may have a cylindrical shape with an empty interior corresponding to the lower surface of the circular dripper 61. A portion of the dripper cap 622, dripper sealer 623, and dripper wing 624 may be disposed in the empty interior of the dripper base 621.

A connection hole 6211 may be formed in the dripper base 621. The connection hole 6211 may be formed through the dripper base 621 to communicate with the extraction hole 612. The coffee extracted from the dripper 61 may be provided to the coffee server 70 through the extraction hole 612 and connection hole 6211 that are in communication with each other.

A first screw 6212 may be formed on the inner surface of the connection hole 6211. As will be described later, the first screw 6212 may engage with the second screw 6222 formed on the lower side of the outer surface of the dripper cap 622. For example, the first screw 6212 may be a female thread, and the second screw 6222 may be a male thread.

A plurality of first coupling members 6213 may be formed on the outer surface of the dripper base 621. The first coupling member 6213 may be formed on the dripper base 621 to couple the dripper base 621 to the first pulley 627. As an example, the first coupling member 6213 may be formed on the lower side of the outer surface of the dripper base 621. The first coupling member 6213 may have a rectangular parallelepiped shape, but the disclosure is not limited thereto.

The first coupling member 6213 may be coupled to a plurality of second coupling members 6271 formed on the inner surface of the first pulley 627. The second coupling member 6271 may have a rectangular parallelepiped shape, but the disclosure is not limited thereto. Specifically, a gap (cap) may be formed between two adjacent second coupling members 6271, and the first coupling member 6213 may pass through the cap. In this case, the dripper 61 may move a small amount in the axial direction, and the first coupling member 6213 may also move a small amount. The upper surface of the first coupling member 6213, which has moved slightly, may contact the lower surface of the second coupling member 6271. Accordingly, the dripper base 621 may be coupled to the first pulley 627 and fixed through contact between the first coupling member 6213 and the second coupling member 6271.

When the first coupling member 6213 and second coupling member 6271 are coupled, the first part of the dripper module 60 may be mounted on the second part of the dripper module 60. When the first coupling member 6213 and second coupling member 6271 are not coupled, the first part of the dripper module 60 may be detached from the second part of the dripper module 60.

The dripper cap 622 may be provided to open and close the extraction hole 612. The dripper cap 622 may be disposed inside the extraction hole 612 and connection hole 6211. Referring to FIGS. 11 and 14, the dripper cap 622 may have an overall cylindrical shape to correspond to the shapes of the extraction hole 612 and connection hole 6211.

The upper side of the dripper cap 622 may be coupled to the extraction hole 612. The dripper cap 622 may move in the upward-downward direction inside the extraction hole 612, and thus the extraction hole 612 may be opened and closed. In this case, since the dripper 61 does not rotate axially, the dripper cap 622 coupled with the extraction hole 612 may also not rotate axially. That is, the dripper cap 622 may only move in the upward-downward direction without rotating in the axial direction.

Referring to FIG. 13, a plurality of guide members 6221 may be formed at the upper end of the dripper cap 622. The number of guide members 6221 may be the same as the number of guide protrusions 613. The plurality of guide members 6221 may be formed on the front, rear, left, and right sides of the upper end of the dripper cap 622, respectively. That is, the plurality of guide members 6221 may be formed in a cross shape at the upper end of the dripper cap 622. However, the arrangement position of the guide member 6221 is not limited to the above drawing.

A guide hole 6221a may be formed at the outer end of the guide member 6221. The guide protrusion 613 may be inserted into the guide hole 6221a. By inserting the guide protrusion 613 into the guide hole 6221a, the upward-downward movement of the dripper cap 622 within the extraction hole 612 may be stably supported.

The dripper sealer 623 may be provided to prevent coffee from leaking into the extraction hole 612 (i.e., the second extraction hole 6122) when the extraction hole 612 is closed. The dripper sealer 623 may be disposed below the guide member 6221. Referring to FIG. 14, a sealer installation hole 6223 may be formed below the guide member 6221, and the dripper sealer 623 may be installed in the sealer installation hole 6223. The size of the dripper sealer 623 may be smaller than that of the guide member 6221. For example, the size of the dripper sealer 623 may be similar to the size of a portion of the guide member 6221 in which the guide hole 6221a is not formed.

The dripper wing 624 may be installed on the dripper base 621 to support the axial rotation of the dripper base 621. For example, the dripper wing 624 may be screwed to the dripper base 621. Therefore, when the dripper 61 is fixed and the dripper base 621 rotates axially, the dripper wing 624 may also rotate axially, along with the dripper base 621. Therefore, it may perform a similar function to the bearing that is the dripper wing 624.

The dripper supports 625 and 626 may support the first part of the dripper module 60 and provide a space where the first pulley 627 is installed. The dripper supports 625 and 626 may be configured to include a first dripper support 625 and a second dripper support 626. The first dripper support 625 may form the lower side of the dripper supports 625 and 626, and the second dripper support 626 may form the upper side of the dripper supports 625 and 626. The first dripper support 625 and second dripper support 626 may be coupled with each other to form dripper supports 625 and 626.

A first through hole 6251 communicating with the connection hole 6211 of the dripper base 621 may be formed in the first dripper support 625. A second through hole 6261 for inserting the dripper base 621 may be formed in the second dripper support 626. Therefore, the dripper base 621 coupled to the dripper 61 through the second through hole 6261 is inserted into the dripper supports 625 and 626, and the coffee extracted from the connection hole 6211 of the dripper base 621 may be provided to the coffee server 70 through the first through hole 6251.

A fixing hole 6262 may be formed in the second dripper support 626. The fixing hole 6262 may be formed to be connected to the second through hole 6261. For example, the fixing hole 6262 may have a rectangular shape. In addition, although not shown in the drawing, a fixing protrusion (not shown) may be formed on the outer surface of the dripper 61. The fixing protrusion may be formed on the lower side of the outer surface of the dripper 61 to face the handle 614 of the dripper 61. As an example, the fixing protrusion may have a rectangular shape. The fixing protrusion may be inserted into the fixing hole 6262. That is, the dripper base 621 coupled with the lower surface of the dripper 61 may be accommodated in the second through hole 6261 in a state where the fixing protrusion is inserted into the fixing hole 6262. Accordingly, the dripper 61 does not rotate axially, and only the dripper base 621 may rotate axially.

The first pulley 627 may be disposed inside the dripper supports 625 and 626. The first pulley 627 may have a penetrating shape and may have an overall shape corresponding to the shape of the dripper base 621. For example, the first pulley 627 may have a ring shape with a penetrated interior. The dripper base 621 may be coupled to the inside of the first pulley 627. The plurality of second coupling members 6271 mentioned above may be formed on the inner surface of the first pulley 627. The outer surface of the first pulley 627 may contact a portion of the belt 629.

The second pulley 628 may be disposed outside the dripper supports 625 and 626. The second pulley 628 may be disposed on the same plane as the first pulley 627. A hole may be formed in the center of the second pulley 628 for coupling to the drive shaft of the third motor 630. The outer surface of the second pulley 628 may be in contact with another portion of the belt 629. The second pulley 628 may perform the function of transmitting the driving force of the third motor 630 to the first pulley 627.

The belt 629 may be connected between the first pulley 627 and the second pulley 628. The belt 629 may transmit movement resulting from rotation of the second pulley 628 to the first pulley 627. The third motor 630 may provide power to rotate the dripper base 621.

The operation of the dripper valve module 62 to open and close the extraction hole 612 of the dripper 61 is described as follows. In this case, it is assumed that the first part of the dripper module 60 is coupled with the second part of the dripper module 60, and the dripper cap 622 is in close contact with the bottom surface of the first extraction hole 6121, and thus the extraction hole 612 is closed.

The drive shaft of the third motor 630 may rotate in one direction (i.e., clockwise or counterclockwise). The second pulley 628 may axially rotate in one direction by rotation of the drive shaft of the third motor 630 in one direction, and the first pulley 627 may rotate in one direction by the belt 629. As the first pulley 627 rotates in one direction, the dripper base 621 fixedly coupled to the first pulley 627 may also rotate in one direction.

In this case, the dripper 61 is fixed to the second dripper support 626 and may not rotate axially, and only the dripper base 621 may rotate axially in one direction. As the dripper base 621 axially rotates in one direction, the connection hole 6211 may axially rotate in one direction, and thus the first screw 6212 formed in the connection hole 6211 may rotate in one direction.

Meanwhile, the guide protrusion 613 of the first extraction hole 6121 may be coupled to the guide member 6221 of the dripper cap 622. In this case, since the dripper 61 does not rotate axially, the dripper cap 622 may also not rotate axially. Accordingly, due to rotation of the first screw 6212 in one direction, the second screw 6222 of the dripper cap 622 may be unscrewed from the first screw 6212. The unscrewed second screw 6222 moves linearly upward, and thus the dripper cap 622 itself may move linearly upward inside the extraction hole 612. As the dripper cap 622 moves linearly upward, an open space may be created inside the extraction hole 612. Accordingly, the extraction hole 612 may be opened.

Thereafter, the drive shaft of the third motor 630 may rotate in the other direction opposite to one direction. As the drive shaft of the third motor 630 rotates in the other direction, the second pulley 628 axially rotates in the other direction, and the first pulley 627 may rotate in the other direction by the belt 629. As the first pulley 627 rotates in the other direction, the dripper base 621 coupled to the first pulley 627 may also rotate in the other direction.

As the dripper base 621 axially rotates in the other direction, the connection hole 6211 may axially rotate in the other direction, and accordingly, the first screw 6212 formed in the connection hole 6211 may rotate in the other direction. Accordingly, the second screw 6222 of the dripper cap 622 may be screwed to the first screw 6212 due to rotation of the second screw 6222 in the other direction. The screwed second screw 6222 may move linearly downward, and thus the dripper cap 622 itself may move linearly downward inside the extraction hole 612. As the dripper cap 622 moves linearly downward, the upper side of the dripper cap 622 may come into close contact with the first extraction hole 6121. Accordingly, the extraction hole 612 may be closed.

5. Coffee extraction operation of the coffee maker 1 (control method of the coffee maker 1)

FIG. 15 is a block diagram illustrating the connection relationship between components of the coffee maker 1 according to an embodiment of the disclosure.

Referring to FIG. 15, the coffee maker 1 may include the control module 90.

The control module 90 may be implemented by including physical elements including at least one of application specific integrated circuits (ASICs), digital signal processors (DSPs), digital signal processing devices (DSPDs), programmable logic devices (PLDs), field programmable gate arrays (FPGAs), microcontrollers, and microprocessors.

The control module 90 may control the heating module 23 of the water tank module 20, control the motor of the grinder module 40, control the first motor 534, second motor 534, and water pump 565 of the water outlet module 50, and control the third motor 630 of the dripper valve module 62. In particular, the control module 90 may measure the water level by receiving a sensing value from the water level sensor of the water tank module 20. In addition, the first motor 534 and second motor 544 may be controlled by receiving sensing values from each of the Hall sensor 58 and photo interrupter 59 of the water outlet module 50. The control module 90 is connected to the circuit board 80 and may perform the above-described measurement and control operations.

An input/output module 92 may receive control input from the user and output the operation status and notification message of the coffee maker 1. In particular, the input/output module 92 may output information for selecting a coffee recipe and receive selection information from the user.

The input/output module 92 may include an input part and an output part. For example, the input/output module 92 may include a touch-enabled display part. Alternatively, the output part may include a speaker.

A communication module 94 may be a device for communicating with a user's terminal device or management server. Here, the terminal device includes a display part and may be a processor-based device that executes an application for controlling the coffee maker 1. The user may control the coffee maker 1 using the terminal device and identify the operation status and notification messages of the coffee maker 1. In particular, under user control, the terminal device may transmit coffee recipe selection information to the communication module 94.

The communication module 94 may include a mobile communication module, a short-range communication module, etc.

Mobile communication modules may transmit and receive signals on a communication network built according to, for example, Global System for Mobile communication (GSM), Code Division Multi Access (CDMA), Code Division Multi Access 2000 (CDMA2000), Enhanced Voice-Data Optimized or Enhanced Voice- Data Only (EV-DO), Wideband CDMA (WCDMA), High Speed Downlink Packet Access (HSDPA), High Speed Uplink Packet Access (HSUPA), Long Term Evolution (LTE), Long Term Evolution-Advanced (LTE-A), fifth generation technology standard (5G), etc.

Short-range communication modules may include at least one of Bluetooth, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (Wireless USB) technologies.

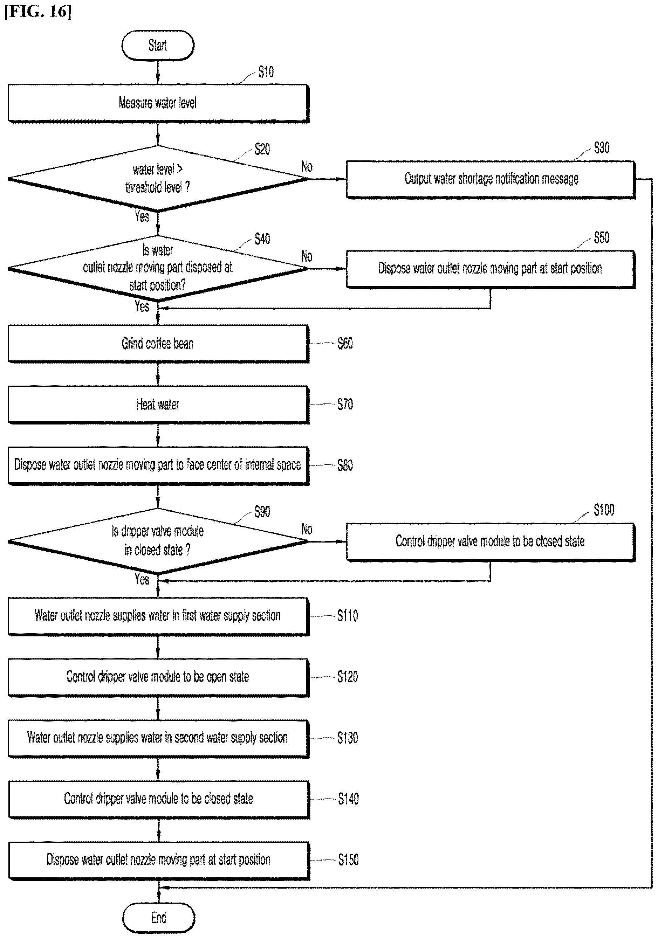

FIG. 16 is a diagram illustrating a flowchart of a control method of the coffee maker 1 according to an embodiment of the disclosure.

In the control method of the coffee maker 1 according to an embodiment of the disclosure, steps for extracting coffee may be performed in a manner similar to the hand drip method. The control method of the coffee maker 1 may be performed centered on the control module 90.

In other words, as mentioned above, the hand drip method may include the pre-wetting process and coffee extraction process performed sequentially, and the user may supply water with coffee powder in a spiral shape. The hand drip method may be implemented through the control method of the coffee maker 1 described below.

Hereinafter, the process performed at each step will be described in detail.

Meanwhile, it is assumed that a sufficient amount of coffee beans are received in the hopper 30, and the first part of the dripper module 60 is coupled with the second part of the dripper module 60. For convenience of explanation, the components that perform the operation of dispensing water are interchangeably referred to as the "nozzle 561" or "water outlet nozzle 56." In addition, "the first side of the internal space 50a" is referred to as "the center of the internal space 50a," and "the second side of the internal space 50a" is referred to as "the edge of the internal space 50a." So, the "first direction" is called "clockwise" and the "second direction" is called "counterclockwise". However, the disclosure is not limited thereto.

In step S10, the control module 90 may measure the level of water received in the water tank module 20.

That is, the water level sensor of the water tank module 20 may transmit a sensing value related to the water level to the control module 90. The control module 90 may measure the water level based on the transmitted sensing value.

In step S20, the control module 90 may determine whether the measured water level is greater than a threshold level. Step S20 may be a step of identifying whether sufficient water is received in the water tank module 20 for extraction of coffee.

If the measured water level is less than or equal to the threshold level, in step S30, the input/output module 92 may output a water shortage notification message under the control of the control module 90. Accordingly, the user may supply water to the water tank module 20.

If the measured water height is greater than the threshold level, in step S40, the control module 90 may determine whether the water outlet nozzle moving part 55 is disposed at a start position.

Here, the start position of the water outlet nozzle moving part 55 may be a position adjacent to the edge of the internal space 50a. That is, the start position of the water outlet nozzle moving part 55 may be the position of the water outlet nozzle moving part 55 illustrated in FIG. 8 .

The control module 90 may determine whether the water outlet nozzle moving part 55 is disposed at the start position based on the sensing value detected by the Hall sensor 58. That is, a first magnet may be installed in the first ring gear 531, and a first Hall sensor 58 may be installed adjacent to the first ring gear 531. In addition, a second magnet may be installed in the second ring gear 541, and a second Hall sensor 58 may be installed adjacent to the second ring gear 541. When the first Hall sensor 58 reacts with the first magnet or the second Hall sensor 58 reacts with the second magnet, a sensing value may be detected, and the detected sensing value may be transmitted to the control module 90. Accordingly, the control module 90 may determine whether the water outlet nozzle moving part 55 is disposed at the start position based on the transmitted sensing value.

If the water outlet nozzle moving part 55 is not disposed at the start position, the control module 90 may dispose the water outlet nozzle moving part 55 at the start position in step S50.

As an example, the control module 90 may operate only the first motor 534 to dispose the water outlet nozzle moving part 55 at the start position. That is, the control module 90 may operate the first motor 534 to rotate the first ring gear 531 by an angle A. In this case, the water outlet nozzle moving part 55 may be rotated by an angle B and disposed at the start position.

As another example, the control module 90 may operate only the second motor 544 to dispose the water outlet nozzle moving part 55 at the start position, and operate all of the first motor 534 and second motor 544 to dispose the water outlet nozzle moving part 55 at the start position. Since this is similar to the content described above, detailed description is omitted.

When the water outlet nozzle moving part 55 is disposed at the start position, the grinder module 40 may grind coffee beans under the control of the control module 90 in step S60. That is, the control module 90 may control the motor included in the grinder module 40 to generate coffee powder from coffee beans. At this time, the grinder module 40 may grind coffee beans to a preset grinding degree. The particle size of the coffee powder may be determined depending on the grinding degree.

According to an embodiment, the grinding degree of the grinder module 40 may be set based on at least one of the type of coffee beans and the coffee recipe.

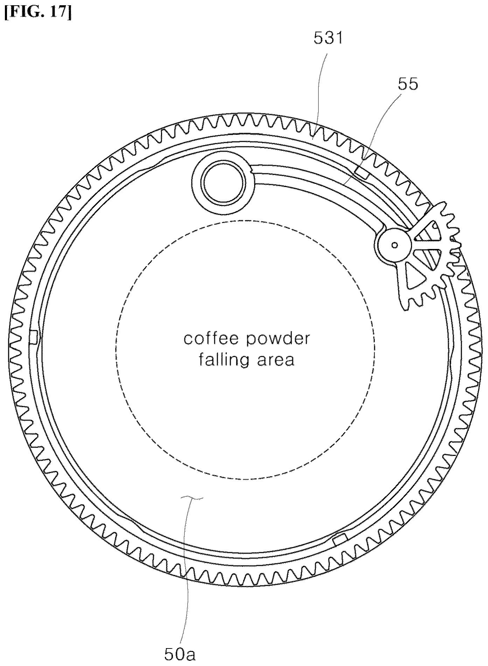

The coffee powder generated by the grinder module 40 may fall to the dripper 61 by gravity and may be received in the coffee powder falling area illustrated in FIG. 17.

On the other hand, if the coffee powder falls to the dripper 61 in a state where the water outlet nozzle moving part 55 is not disposed at the start position, the coffee powder may accumulate on the upper surface of the water outlet nozzle moving part 55. In this case, the rotational movement of the water outlet nozzle moving part 55 in the first and second water supply sections, which will be described later, may be interrupted. Accordingly, steps S40 and S50 described above may be performed to smoothly rotate the water outlet nozzle moving part 55.

In step S70, the heating module 23 in the water tank module 20 may heat water under the control of the control module 90. That is, in order to extract coffee using the aforementioned hot brew method, the control module 90 may operate the heating module 23 to heat the water received in the water tank body 21.

Meanwhile, step S70 has been described as being performed after step S60, but step S70 may be performed before step S60, and step S60 and step S70 may be performed simultaneously. In addition, when extracting coffee using the cold brew method mentioned above, step S70 may be omitted.

In step S80, the control module 90 may dispose the water outlet nozzle moving part 55 to face the center of the internal space 50a. That is, the control module 90 may operate at least one of the first motor 534 and the second motor 544 to move the water outlet nozzle moving part 55 disposed at the start position toward the center of the internal space 50a (see FIG. 7). Accordingly, the water outlet nozzle 56 may be disposed at the center of the internal space 50a.

Meanwhile, since step S80 is similar to step S50 described above, detailed description will be omitted.

In step S90, the control module 90 may determine whether the dripper valve module 62 is in a closed state. If the dripper valve module 62 is in an open state, the control module 90 may control the dripper valve module 62 to be the closed state in step S100. Steps S90 and S100 may be preparation steps for the pre-wetting process.

As an example, when the dripper valve module 62 has the structure shown in FIGS. 11 to 14, in step S90, the control module 90 may analyze the rotation state of the third motor 630 and determine the status of the dripper valve module 62. In addition, in step S100, the control module 90 may operate the third motor 630 to control the dripper valve module 62 from the open state to the closed state. Accordingly, the extraction hole 612 formed on the lower surface of the dripper 61 may be closed.

In step S 110, the water outlet nozzle 56 may supply water in the first water supply section under the control of the control module 90. Step S110 may be the step of implementing the pre-wetting process in the hand drip method. That is, the first water supply section may be a section for the pre-wetting process.

As previously mentioned, the pre-wetting process is the process of pouring a small amount of water into the coffee powder before performing the coffee extraction process, and then waiting for a certain period of time. Through the pre-wetting process, water is uniformly spread over the coffee powder in advance, the coffee powder expands, and the carbon gas contained in the coffee powder is discharged.

In this case, a small amount of coffee may be extracted during the pre-wetting process. However, if a small amount of coffee is discharged from the dripper 61 through the extraction hole 612, the pre-wetting process may not be performed properly. In other words, when a small amount of coffee is discharged, the ingredients that make up the coffee do not dissolve in water, so bland coffee may be extracted. Accordingly, steps S90 and S100 of closing the extraction hole 612 may be performed before performing step S110.

Meanwhile, the water supply operation of the water outlet nozzle 56 in the first water supply section may be performed at least once. Also, each water supply operation may include a first process and second process that are performed sequentially.

The first operation of the water outlet nozzle 56 may include an operation of the water outlet nozzle 56 to discharge water. The second operation of the water outlet nozzle 56 may include an operation of the water outlet nozzle 56 to stop discharging water. That is, in the pre-wetting process of the hand drip method, the user waits for a certain period of time after discharging water. In this case, the above-described "discharging the user's water" may correspond to the first operation of the water outlet nozzle 56, and the above-described "waiting for a certain period of time" may correspond to the second operation of the water outlet nozzle 56.

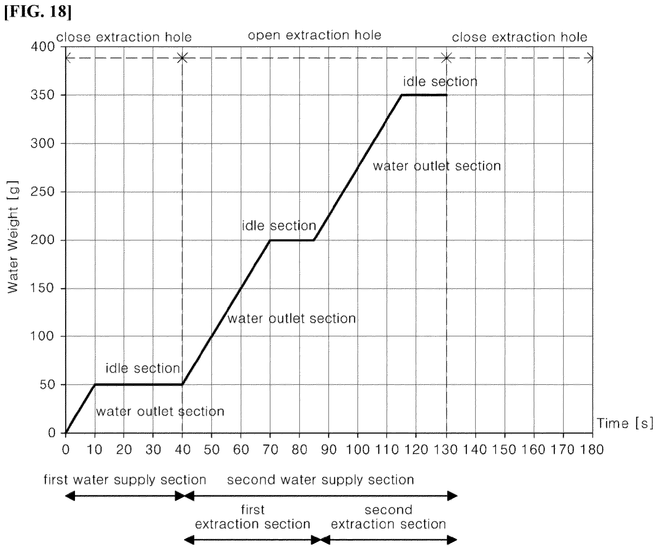

FIG. 18 is a diagram for explaining the water supply operation from the water outlet nozzle 56 over time, according to an embodiment of the disclosure.

Referring to FIG. 18, in the first water supply section, the dripper valve module 62 may be closed and the extraction hole 612 may be closed, and the water outlet nozzle 56 may perform a one-time water supply operation. However, as mentioned above, two or more water supply operations may be performed in the first water supply section.

The first water supply section may include a water outlet section and an idle section. For convenience of description below, the water outlet section of the first water supply section will be referred to as the "first water outlet section" and the idle section of the first water supply section will be referred to as the "first idle section."

In the first water outlet section, the water outlet nozzle 56 may perform the first operation, and in the first idle section, the water outlet nozzle 56 may perform the second operation. For example, referring to FIG. 18, in the first water outlet section, the water outlet nozzle 56 may discharge 50 g of water to the dripper 61 for 10 seconds, and in the first idle section, the water outlet nozzle 56 may not dispense water for 30 seconds.

According to an embodiment, based on at least one of the coffee recipe and the amount of coffee powder received in the dripper 61, the number of water supply operations for coffee, the amount of water outleted in the first operation, the performance time of the second operation, etc. may be set in the first water supply section. A coffee recipe may be set based on the type of coffee beans (e.g., country of production), roasting level, time elapsed after roasting, etc. The coffee recipe may be input through the input/output module 92 or user's terminal device.

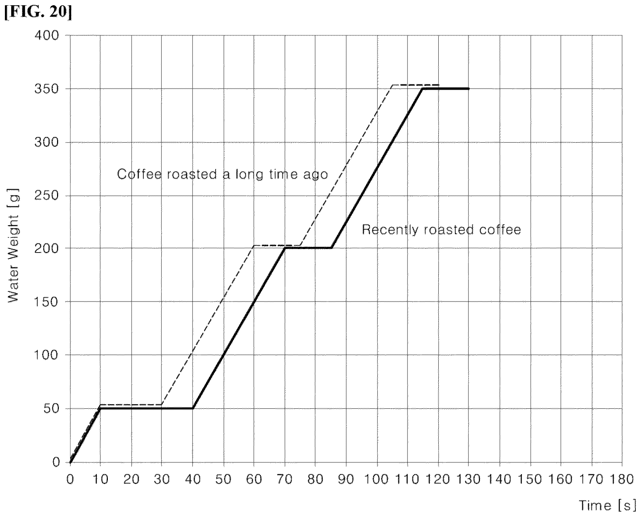

In particular, according to one embodiment of the disclosure, the performance time of the second operation in the first water supply section, that is, the length of the first idle section, may be inversely proportional to the elapsed time of roasting. In other words, in each of one or more water supply operations of the water outlet nozzle 56 performed in the first water supply section, the performance time of the second operation of the water outlet module 50 may be inversely proportional to the time elapsed for roasting the coffee powder. This is as shown in FIG. 20.

In general, the time elapsed since coffee beans were roasted and the carbon gas content contained in the coffee beans are inversely proportional. That is, recently roasted coffee beans contain a lot of carbon gas, and older roasted coffee beans contain less carbon gas. Accordingly, the controller may control the length of the first idle period (i.e., the performance time of the second operation of the water outlet module 50) to be inversely proportional to the elapsed time of roasting.

In addition, according to an embodiment, in the first water outlet section, the controller may set the rotation speed of each of the first ring gear 531 and second ring gear 541 based on the radius of the coffee powder received in the dripper 61.

Specifically, the radius of the coffee powder received in the dripper 61 is proportional to the amount of coffee powder received in the dripper 61. Also, as mentioned above, as the rotation speed of each of the first and second ring gears 531 and 541 increases, the moving part of the water outlet nozzle 56 revolves at a faster speed, so that a small amount of water may be discharged. As the rotation speed of each of the first and second ring gears 531 and 541 decreases, the moving part of the water outlet nozzle 56 rotates at a slower speed, so that a large amount of water may be discharged. Therefore, in order to increase the solubility of the coffee powder, the controller may set the rotation speed of each of the first and second ring gears 531 and 541 to be inversely proportional to the radius of the coffee powder.

Meanwhile, as described above, in the first water outlet section, the water outlet nozzle 56 may move in a spiral manner. That is, the first operation of the water outlet nozzle 56 performed in the first water outlet section may be a spiral movement while discharging water.

According to an embodiment, the first water outlet section may include a sequential first time period and second time period. Here, the length of the first time period may be the same as the length of the second time period. In the first time period, the water outlet nozzle 56 may move spirally from the center direction of the internal space 50a to the edge direction of the internal space 50a based on the rotation of the water outlet nozzle moving part 55. Also, in the second time period after the first time period, the water outlet nozzle 56 moves spirally from the edge direction of the internal space 50a to the center direction of the internal space 50a based on the rotation of the water outlet nozzle moving part 55.

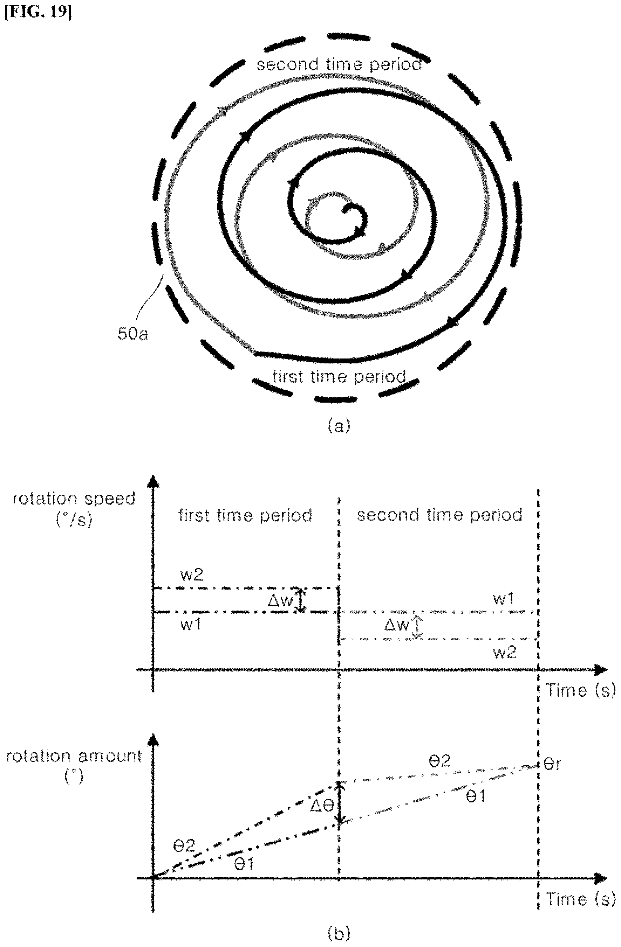

FIG. 19 is a diagram for explaining the concept of spiral movement of the water outlet nozzle 56 in the water outlet section, according to an embodiment of the disclosure.

In FIG. 19, (a) shows the spiral movement of the water outlet nozzle 56 in the first water outlet section. In this case, the first ring gear 531 and second ring gear 541 may rotate clockwise.

Referring to (a) in FIG. 19, the water outlet nozzle 56 may be disposed at the center of the internal space 50a through step S80. Also, in the first time period, the water outlet nozzle 56 may move spirally in a clockwise direction. In this case, the water outlet nozzle 56 may move spirally from the center direction of the internal space 50a to the edge direction of the internal space 50a. In addition, in the second time period, the water outlet nozzle 56 may move spirally in a clockwise direction. In this case, the water outlet nozzle 56 may move spirally from the edge direction of the internal space 50a to the center direction of the internal space 50a.

In order to enable the spiral movement of the water outlet nozzle 56 shown in (a) in FIG. 19, the control module 90 controls the operation of the first motor 534 and second motor 544. As shown in (b) in FIG. 19, the constant rotation speed of each of the first ring gear 531 and second ring gear 541 may be set.

Referring to (b) in FIG. 19, in the first time period, the control module 90 may control the second constant rotation speed w2 of the second ring gear 541 to be greater than the first constant rotation speed w1 of the first ring gear 531 by a preset speed difference $\triangle$w. In this case, the second rotation amount $\ominus$2 of the second ring gear 541 in the first time period may be larger than the first rotation amount $\ominus$1 of the first ring gear 531 in the first time period by a preset difference $\triangle\ominus$. Accordingly, the water outlet nozzle moving part 55 may revolve clockwise and rotate clockwise in the internal space 50a. Accordingly, the water outlet nozzle 56 may move spirally from the center of the internal space 50a to the edge of the internal space 50a.

Also, referring to (b) in FIG. 19, in the second time period, the control module 90 may control the second constant rotation speed (w2) of the second ring gear 541 as smaller than the first constant rotation speed (w1) of the first ring gear 531 by a preset speed difference ($\triangle$w). At this time, the speed difference ($\triangle$w) between the second constant speed rotation speed (w2) and the first constant speed rotation speed (w1) in the first time period may be equal to the speed difference ($\triangle$w) between the second constant speed rotation speed (w2) and the first constant speed rotation speed (w1) in the second time period. In this case, the second rotation amount $\ominus$2 of the second ring gear 541 in the second time period is smaller as a preset difference ($\triangle\ominus$) than the first rotation amount $\ominus$1 of the first ring gear 531 in the second time period. Accordingly, the water outlet nozzle moving part 55, in the internal space 50a, may revolve clockwise and may rotate counterclockwise. Accordingly, the water outlet nozzle 56 may be moved spirally from the edge of the internal space 50a to the center of the internal space 50a.

Meanwhile, the length of the first time period and the length of the second time period may be equal. Therefore, due to the speed difference ($\triangle$w) between the first constant rotation speed w1 and the second constant rotation speed w2, the total rotation amount of the first ring gear 531 in the first water outlet section may be equal to the total rotation amount of the second gear 541. Accordingly, at the end point of the second time period, the water outlet nozzle moving part 55 may be disposed to face the center of the internal space 50a (see FIG. 7), and the water outlet nozzle 56 may be disposed in the center of the internal space 50a.

Specifically, as in the example in FIG. 10, in the first time period, the control module 90 may control the second ring gear 541 to rotate at a constant speed of 46°/s, and the first ring gear 541 to rotate at a constant speed of 45°/s. In this case, the second rotation amount $\theta$2 of the second ring gear 541 may be greater than the first rotation amount $\theta$1 of the first ring gear 531 by 11°, and the water outlet nozzle moving part 55 may rotate clockwise at 5° per second. Therefore, in the first time period, the first ring gear 531 may rotate by 495°, the second ring gear 541 may rotate by 506°, and the water outlet nozzle moving part 55 may rotate clockwise by 55° and disposed at the start position (see FIG. 8). Through this process, the water outlet nozzle moving part 55 may spirally move the water outlet nozzle 56 from the center of the internal space 50a to the edge of the internal space 50a.

Then, in the second time period, the control module 90 may control the second ring gear 541 to rotate at a constant speed of 44°/s and the first ring gear 531 to rotate at a constant speed of 45°/s. In this case, the second rotation amount θ2 of the second ring gear 541 may be smaller than the first rotation amount θ1 of the first ring gear 531 by 11°, and the water outlet nozzle moving part 55 may rotate counterclockwise at 5° per second. Therefore, in the second time period, the first ring gear 531 may rotate by 495°, the second ring gear 541 may rotate by 484°, and the water outlet nozzle moving part 55 may rotate counterclockwise by 55° and disposed toward the center of the internal space 50a (see FIG. 7). Through this process, the water outlet nozzle moving part 55 may spirally move the water outlet nozzle 56 from the edge of the internal space 50a to the center of the internal space 50a.

In short, according to an embodiment of the disclosure, in the first water outlet section (first operation of the water outlet nozzle 56), the water outlet nozzle 56 may move spirally from the center of the internal space 50a to the edge of the internal space 50a (first spiral movement) and then move spirally to the center of the internal space 50a (second spiral movement).

Meanwhile, the spiral movement operation of the water outlet nozzle 56 in the first water outlet section is not limited to the content described above.

According to another embodiment of the disclosure, in the first water outlet section (first operation of the water outlet nozzle 56), the water outlet nozzle 56 may move spirally from the edge of the internal space 50a to the center of the internal space 50a and then move spirally to the edge of the internal space 50a. That is, in the first water outlet section, the water outlet nozzle 56 may first perform the second spiral movement and then perform the first spiral movement. In this case, the step (S80) of disposing the water outlet nozzle 56 at the center of the internal space 50a may be omitted.

According to another embodiment of the disclosure, the water outlet nozzle 56 may perform the first spiral movement in the first water outlet section (first operation of the water outlet nozzle 56), and the water outlet nozzle 56 may perform the second spiral movement in the first idle section (second operation of the water outlet nozzle 56). That is, the water outlet nozzle 56 may move spirally from the edge of the internal space 50a to the center of the internal space 50a in the first water outlet section, and the water outlet nozzle 56 may move spirally from the center of the internal space 50a to the edge of the internal space 50a in the first idle section.

According to another embodiment of the disclosure, the water outlet nozzle 56 may move in the second spiral in the first water outlet section (first operation of the water outlet nozzle 56), and the water outlet nozzle 56 may move in the first spiral in the first idle section (second operation of the water outlet nozzle 56). That is, in the first water outlet section, the water outlet nozzle 56 may move spirally from the center of the internal space 50a to the edge of the internal space 50a, and in the first idle section, the water outlet nozzle 56 may move spirally from the edge of the internal space 50a to the center of the internal space 50a. In this case, the step (S80) of disposing the water outlet nozzle 56 at the center of the internal space 50a may be omitted.

Referring again to FIG. 16, in step S120, the control module 90 may control the dripper valve module 62 to be in an open state. Step S120 may be a preparation step for the coffee extraction process.

In this case, the level of the open state of the dripper valve module 62, that is, the opening degree of the extraction hole 612, may be adjusted based on at least one of the coffee recipe and the amount of coffee powder received in the dripper 61.

According to an embodiment, the grinding degree of the grinder module 40, that is, the particle size of the coffee powder, may be set based on the coffee recipe. In this case, the level of the open state of the dripper valve module 62 may be set based on the particle size of the coffee powder.

Specifically, the smaller the particle size of the coffee powder, the slower the speed at which water passes through the coffee powder. In this case, it takes a long time to extract the coffee, so bitter-tasting coffee may be extracted. Accordingly, when the particle size of the coffee powder is small, the level of the open state of the dripper valve module 62 may be set high. In addition, the larger the particle size of the coffee powder, the faster the speed at which water passes through the coffee powder. In this case, the coffee extraction time is accelerated, so sour-tasting coffee may be extracted. Accordingly, when the particle size of the coffee powder is large, the level of open state of the dripper valve module 62 may be set low.

That is, the level of the open state of the dripper valve module 62 may be set to be inversely proportional to the particle size of the coffee powder.

In step S130, the water outlet nozzle 56 may supply water in the second water supply section under the control of the control module 90. Step S130 may be the step of implementing the coffee extraction process in the hand drip method. That is, the second water supply section may be a section for the coffee extraction process.

The water supply operation of the water outlet nozzle 56 in the second water supply section may be performed at least once. Also, each water supply operation may include a first process and a second process that are performed sequentially. That is, in the second water supply section, the water outlet nozzle 56 may supply water similarly to step S110.

Referring to FIG. 18, the second water supply section may include a first extraction section and a second extraction section. However, as mentioned above, the second water supply section may include one extraction section or three or more extraction sections.

In the second water supply section, the dripper valve module 62 may be opened and the extraction hole 612 may be opened. In addition, each of the first extraction section and second extraction section may include a water outlet section and an idle section. For convenience of description below, the water outlet section of the first extraction section is referred to as the "second water outlet section", the water outlet section of the second extraction section is referred to as the "third water outlet section", the idle section of the first extraction section is referred to as the "second idle section", and the idle section of the second extraction section is referred to as the "third idle section."

In each of the second and third water outlet sections, the water outlet nozzle 56 may perform the first operation, and in each of the second and third idle sections, the water outlet nozzle 56 may perform the second operation. For example, referring to FIG. 18, the water outlet nozzle 56 may discharge 150 g of water to the dripper 61 for 30 seconds in the second and third water outlet sections, and the water outlet nozzle 56 may not discharge water to the dripper 61 for 15 seconds in the second and third idle sections. Meanwhile, since the second and third water outlet sections are sections for extracting coffee, more water may be discharged in the second and third water outlet sections than in the first water outlet section.

According to an embodiment, based on at least one of the coffee recipe and the amount of coffee powder received in the dripper 61, in the second water supply section, the number of water supply operations, the amount of water discharged in the first operation, and the performance time of the second operation, etc. may be set.

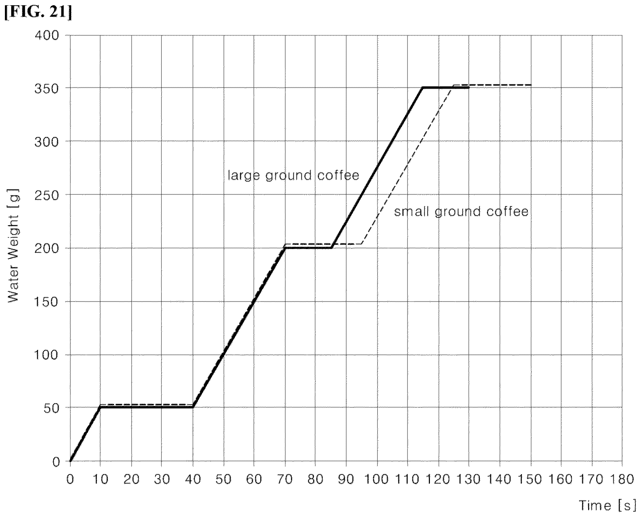

In particular, according to an embodiment of the disclosure, the performance time of the second operation in the second water supply section, that is, the length of the second and third idle sections may be inversely proportional to the grinding degree of the grinder module 40. In other words, in each of one or more water supply operations of the water outlet nozzle 56 performed in the second water supply section, the performance time of the second operation of the water outlet module 50 may be inversely proportional to the particle size of the coffee powder. This is as shown in FIG. 21.

In general, as the particle size of the coffee powder decreases, the hole of the filter installed in the dripper 61 may be blocked. In this case, if additional water is poured into the dripper 61, the water may overflow from the dripper inlet 611. Accordingly, the controller may control the lengths of the second and third idle sections (i.e., the performance time of the second operation of the water outlet module 50) to be inversely proportional to the particle size of the coffee powder.

In addition, according to an embodiment, in the second and third water outlet sections, the controller may set the rotation speed of each of the first and second ring gears 531 and 541 based on the radius of the coffee powder received in the dripper 61. Since this has been explained previously, detailed description will be omitted.

Meanwhile, in the second and third water outlet sections, the water outlet nozzle 56 may move in a spiral manner. That is, the first operation of the water outlet nozzle 56 performed in each of the second and third water outlet sections may be an operation of spirally moving while dispensing water.

According to an embodiment of the disclosure, in each of the second and third water outlet sections (first operation of the water outlet nozzle 56), the water outlet nozzle 56 may move spirally from the center of the internal space 50a to the edge of the internal space 50a and then spirally move to the center of the internal space 50a.

According to another embodiment of the disclosure, in each of the second and third water outlet sections (first operation of the water outlet nozzle 56), the water outlet nozzle 56 may move spirally from the edge of the internal space 50a to the center of the internal space 50a and then spirally move to the edge of the internal space 50a.

According to another embodiment of the disclosure, in each of the second and third water outlet sections (first operation of the water outlet nozzle 56), the water outlet nozzle 56 may move spirally from the edge of the internal space 50a to the center of the internal space 50a, and in the second and third idle sections, the water outlet nozzle 56 may move spirally from the center of the internal space 50a to the edge of the internal space 50a.

Since the movement of the water outlet nozzle 56 described above is similar to that described in step S 110, detailed description will be omitted.

Again, referring to FIG. 16, in step S140, the control module 90 may control the dripper valve module 62 to be in a closed state. Accordingly, the extraction hole 612 may be closed (see FIG. 18).

In other words, if the extraction hole 612 is open after the coffee extraction process corresponding to step S130 is completed, coffee may be additionally extracted and discharged to the coffee server 70. In this case, the additionally extracted coffee may taste bitter. In addition, when the coffee server 70 is detached from the base 12 to drink coffee, the additionally extracted coffee may fall on the base 12. Accordingly, when the coffee extraction process is completed, the control module 90 may control the dripper valve module 62 to be closed to close the extraction hole 612.

In step S150, the control module 90 may dispose the water outlet nozzle moving part 55 at the start position. This may be a process for the next coffee extraction.

Meanwhile, it has been described that step S150 is performed after step S140, but step S150 may be performed before step S140, and step S140 and step S150 may be performed simultaneously.

In summary, the coffee maker 1 according to an embodiment of the disclosure may extract coffee similar to a hand drip operation. In particular, the coffee maker 1 may implement the pre-wetting process during a hand drip operation, and may supply water to coffee powder in a spiral form similar to a hand drip operation.

To this end, the coffee maker 1 may close the extraction hole 612 by controlling the dripper valve module 62 to a closed state in the first water supply section corresponding to the pre-wetting process, and open the extraction hole 612 by controlling the dripper valve module 62 to an open state in the second water supply section corresponding to the coffee extraction process. In addition, the coffee maker 1 may perform the first operation of discharging water and the second operation of stopping (or idling) the discharging of water in each water supply section. Therefore, water may be supplied to the coffee powder similar to the hand drip process, and coffee with optimal taste and aroma may be extracted.

In addition, the coffee maker 1 may control the water outlet nozzle 56 to spirally move water between the center and edge of the coffee powder received in the dripper 61. Therefore, water may be uniformly supplied to the coffee powder. Similar to the hand drip process, water may be supplied with coffee powder.

In addition, the coffee maker 1 may move the water outlet nozzle 56 in a spiral manner by controlling the axial rotation of the first and second ring gears 541 that are stacked and arranged. Therefore, the spiral movement of the water outlet nozzle 56 may be implemented simply and efficiently.

Further, the coffee maker 1 may close the extraction hole 612 after the coffee extraction process is completed. Accordingly, bitter taste is removed from coffee, and convenience of use may be increased.

In addition, the embodiments of the disclosure may be implemented as program instructions executable by various kinds of computer means and recorded on a computer-readable recording medium. The computer-readable recording medium may include program instructions, data files, data structures or the like solely or in combination. The program instructions recorded on the medium may be specially designed or configured for the disclosure or known to and available by computer software engineers. The computer-readable recording medium includes, for example, magnetic media such as a hard disk, a floppy disk and a magnetic tape, optical media such as CD-ROM and DVD, magnetooptical media such as a floptical disk, hardware devices such as ROM, RAM and a flash memory, specially configured to store and perform program instructions, or the like. The program instructions include not only machine codes made by a compiler but also high-level language codes executable by a computer by using an interpreter. The hardware device may be configured to operate as at least one software module to perform the operations of the disclosure, or vice versa.

As described above, the disclosure has been described with specific details such as specific components and certain embodiments and drawings, but this is only provided to aid the overall understanding of the disclosure, the disclosure is not limited to the above embodiments, and various modifications and variations can be made from this description by those skilled in the art to which the disclosure pertains. Accordingly, the spirit of the disclosure should not be limited to the described embodiments, and the claims described below as well as all modifications that are equivalent or equivalent to the claims will fall within the scope of the disclosure.

## Claims

1. A coffee maker, comprising:

   a dripper that receives coffee powder and includes an extraction hole formed on a lower surface for extracting coffee from the coffee powder;
   a dripper valve module that operates in an open state to open the extraction hole or a closed state to close the extraction hole; and
   a water outlet module that performs an operation of supplying water to the coffee powder,
   wherein the water outlet module performs a water supply operation in each of first and second water supply sections that are sequential,
   in the first water supply section, the dripper valve module operates in the closed state, and in the second water supply section, the dripper valve module operates in the open state.

2. The coffee maker of claim 1, wherein at an end point of the second water supply section, the dripper valve module operates in the closed state.

3. The coffee maker of claim 1, wherein the dripper valve module includes:

   a dripper base that is rotatably connected to the fixed lower surface of the dripper in an axial direction of the extraction hole and includes a connection hole connected to the extraction hole; and
   a dripper cap that moves in an upward-downward direction inside the extraction hole and includes a second screw formed on a lower portion of an outer surface,
   wherein a first screw that engages with a second screw is formed on an inner surface of the connection hole,
   the first screw rotates by an axis rotation of the dripper base, and the second screw is unscrewed or screwed by the rotation of the first screw, so that the dripper cap moves in the upward-downward direction of the extraction hole, and the extraction hole is opened or closed by moving in the upward-downward direction of the extraction hole.

**4.** The coffee maker of claim 1, wherein in each of the first and second water supply sections, the water outlet module performs one or more water supply operations,

the water supply operation of the water outlet module includes first and second operations performed sequentially,
the first operation of the water outlet module includes an operation of the water outlet module to dispense water, and the second operation of the water outlet module includes an operation of the water outlet module to stop discharging the water.

**5.** The coffee maker of claim 4, wherein the coffee powder is roasted coffee powder,
in each of the one or more water supply operations of the water outlet module performed in the first water supply section, a performance time of the second operation of the water outlet module is inversely proportional to the elapsed time.

**6.** The coffee maker of claim 4, wherein in each of the one or more water supply operations of the water outlet module performed in the second water supply section, the performance time of the second operation of the water outlet module is inversely proportional to a particle size of the coffee powder.

**7.** The coffee maker of claim 1, wherein the water outlet module includes:

a first rotation member that has a penetrated interior;
a second rotation member that is disposed above the first rotation member and has a penetrated interior;
a water outlet nozzle that discharges water from an internal space defined by the penetrated interior of the first rotation member and the penetrated interior of the second rotation member; and
a water outlet nozzle moving part that moves in the internal space based on the rotation of each of the first and second rotation members and is coupled to the water outlet nozzle,
wherein the water outlet nozzle moving part spirally moves the water outlet nozzle between a first side of the internal space corresponding to a center of an inlet of the dripper and a second side of the internal space corresponding to an edge of the inlet of the dripper.

**8.** The coffee maker of claim 7, wherein before the coffee powder is received in the dripper, the water outlet nozzle moving part is disposed at a start position adjacent to the second side of the internal space,

before the first water supply section starts, the water outlet nozzle moving part moves the water outlet nozzle to the first side of the internal space,
after the second water supply section ends, the water outlet nozzle moving part is disposed at the start position.

**9.** The coffee maker of claim 7, wherein at a start point of a first operation in which the water outlet nozzle discharges the water, the water outlet nozzle is disposed on the first side of the internal space,
in the first operation of the water outlet nozzle, the water outlet nozzle moves spirally from a first side direction of the internal space to a second side direction of the internal space and then spirally moves to the first side of the internal space.

**10.** The coffee maker of claim 7, wherein at a start point of a first operation in which the water outlet nozzle discharges the water, the water outlet nozzle is disposed on the second side of the internal space,
in the first operation of the water outlet nozzle, the water outlet nozzle moves spirally from the second side of the internal space to the first side of the internal space and then spirally moves to the second side of the internal space.

**11.** The coffee maker of claim 7, wherein at a start point of a first operation in which the water outlet nozzle discharges the water, the water outlet nozzle is disposed on the first side of the internal space,

in the first operation of the water outlet nozzle, the water outlet nozzle moves spirally from the first side of the internal space to the second side of the internal space,
in a second operation in which the water outlet nozzle stops discharging the water, the water outlet nozzle moves spirally from the second side of the internal space to the first side of the internal space.

**12.** The coffee maker of claim 7, wherein the water outlet nozzle moving part is coupled with the first rotation member at a first point of the first rotation member, contacts at a first point of the second rotation member so as to be able to pivot, rotates about the first point of the first rotation member while revolving around the first side of the internal space based on the rotation of each of the first and second rotation members,
the water outlet nozzle moves spirally based on the revolution and rotation of the water outlet nozzle moving part.

**13.** The coffee maker of claim 12, wherein the water outlet nozzle moving part includes:

a hinge that is coupled at the first point of the first rotation member;

a first arm that extends from the hinge in a first side direction of the internal space and is coupled to the water outlet nozzle; and

a second arm that is formed to extend opposite to the first arm about the hinge and pivots in contact with the first point of the second rotation member,

wherein the water outlet nozzle moving part revolves based on the rotations of the first and second rotation members,

a rotation of the second arm is adjusted based on a difference between a rotation speed of the first rotation member and a rotation speed of the second rotation member, so that the water outlet nozzle moving part rotates around the first point of the first rotation member.

14. The coffee maker of claim 13, wherein a difference value between a rotation amount of the first rotation member and a rotation amount of the second rotation member according to the difference between the rotation speed of the first rotation member and the rotation speed of the second rotation member has a relationship as shown in an equation below:

$$\Delta\theta = 2 \times \frac{Ra}{Rb} \times \arcsin(\frac{Lb}{2 \times Rb})$$

wherein, $\Delta\theta$ is the difference value, Ra is a length of the second arm, Rb is a length of the first arm, and Lb is a rotation length of the water outlet nozzle according to a rotation of the water outlet nozzle moving part.

15. The coffee maker of claim 12, wherein in a time period in which a rotation speed of the second rotation member is greater than a rotation speed of the first rotation member, the water outlet nozzle moving part spirally moves the water outlet nozzle from the first side of the internal space to the second side of the internal space, in a time period in which the rotation speed of the first rotation member is greater than the rotation speed of the second rotation member, the water outlet nozzle moving part spirally moves the water outlet nozzle from the second side of the internal space to the first side of the internal space.

16. The coffee maker of claim 12, wherein a rotation speed of each of the first and second rotation members is set based on a radius of the coffee powder contained in the dripper.

17. The coffee maker of claim 12, wherein in a first operation in which the water outlet nozzle discharges the water, the first and second rotation members rotate in a first direction,

in a first time period among a time period in which the first operation is performed, a rotation speed of the second rotation member is greater than a rotational speed of the first rotation member by a preset first speed difference value, the water outlet nozzle moving part revolves in the first direction based on the first speed difference value, rotates in the first direction, and spirally moves the water outlet nozzle from the first side of the internal space to the second side of the internal space.

18. The coffee maker of claim 17, wherein in a second time period after the first time period among the time period in which the first operation is performed, the rotation speed of the second rotation member is smaller than the rotation speed of the first rotation member by a preset second speed difference value, the water outlet nozzle moving part revolves in the first direction based on the second speed difference value and rotates in a second direction opposite to the first direction, and spirally moves the water outlet nozzle from the second side of the internal space to the first side of the internal space.

19. The coffee maker of claim 18, wherein in the time period in which the first operation is performed, the first rotation member and the second rotation member rotate at a constant speed, a length of the first time period and a length of the second time period are equal, and the first speed difference value and the second speed difference value are equal.

20. A coffee maker, comprising:

a dripper that receives coffee powder and includes an extraction hole formed on a lower surface for extracting coffee from the coffee powder;

a dripper valve module that operates in an open state to open the extraction hole or a closed state to close the extraction hole; and

a water outlet module that performs an operation of supplying water to the coffee powder,

wherein an opening degree of the extraction hole corresponds to a level of the open state of the dripper valve module,

the level of the open state of the dripper valve module is set based on a particle size of the coffee powder.

21. The coffee maker of claim 20, further comprising a grinder module that grinds a coffee bean according to a preset grinding degree to generate the coffee powder, and provides the generated coffee powder to the dripper,
wherein the grinding degree corresponds to the particle size of the coffee powder.

22. The coffee maker of claim 20, wherein the level of the open state of the dripper valve module is set to be inversely proportional to the particle size of the coffee powder.

23. The coffee maker of claim 20, wherein the particle size of the coffee powder is set based on a coffee recipe.

24. A control method of a coffee maker comprising a processor, comprising:

controlling a dripper valve module to close an extraction hole formed in a lower surface of a dripper in which coffee powder is received;
controlling a water outlet module to supply water to the coffee powder in a first water supply section;
controlling the dripper valve module to open the extraction hole;
controlling the water outlet module to supply the water to the coffee powder in a second water supply section; and
controlling the dripper valve module to close the extraction hole.

[FIG. 1]

[FIG. 2]

[FIG. 3]

[FIG. 4]

[FIG. 5]

[FIG. 6]

[FIG. 7]

[FIG. 8]

[FIG. 9]

(a)

(b)

**[FIG. 10]**

θ1:0°
θ2:0°
θa:0°

θ1:45°
θ2:46°
θa:5°

θ1:90°
θ2:92°
θa:10°

θ1:135°
θ2:138°
θa:15°

θ1:180°
θ2:184°
θa:20°

θ1:225°
θ2:230°
θa:25°

θ1:270°
θ2:276°
θa:30°

θ1:315°
θ2:322°
θa:35°

θ1:360°
θ2:368°
θa:40°

θ1:405°
θ2:414°
θa:45°

θ1:450°
θ2:460°
θa:50°

θ1:495°
θ2:506°
θa:55°

[FIG. 11]

60

[FIG. 12]

[FIG. 13]

60

611

613
612
6221
6121
6122

61

629

614

623

622
6222
6212

6211
6251

626
625
627
624

[FIG. 14]

6221a
6221
6223
622

6222

6212

621
6211

[FIG. 15]

1

90

| 20 — | water tank module | | control module | | dripper valve module | — 62 |
|---|---|---|---|---|---|---|

grinder module — 40

water outlet module — 50

input/output module — 92

communication module — 94

[FIG. 16]

```
                          ( Start )
                             │
                             ▼                          ⌐ S10
        ┌────────────────────────────────────────┐
        │           Measure water level          │
        └────────────────────────────────────────┘
                             │
                             ▼            ⌐ S20                              ⌐ S30
                        ◇ water level >        No    ┌──────────────────────────────────────────┐
                        ◇ threshold level ?  ────────▶│  Output water shortage notification message │
                             │                        └──────────────────────────────────────────┘
                          Yes│                                                    │
                             ▼            ⌐ S40                              ⌐ S50
                        ◇ Is water             No    ┌──────────────────────────────────────────┐
                 ◇ outlet nozzle moving part disposed at ────▶│  Dispose water outlet nozzle moving part at start position │
                        ◇ start position?            └──────────────────────────────────────────┘
                          Yes│◀─────────────────────────────────┘
                             ▼
        ┌────────────────────────────────────────┐
        │           Grind coffee bean            │ ⌐ S60
        └────────────────────────────────────────┘
                             │
                             ▼
        ┌────────────────────────────────────────┐
        │              Heat water                │ ⌐ S70
        └────────────────────────────────────────┘
                             │
                             ▼
        ┌────────────────────────────────────────────────────┐
        │ Dispose water outlet nozzle moving part to face center of internal space │ ⌐ S80
        └────────────────────────────────────────────────────┘
                             │
                             ▼            ⌐ S90                              ⌐ S100
                        ◇ Is dripper valve module  No  ┌──────────────────────────────────────────┐
                        ◇ in closed state ?  ──────────▶│  Control dripper valve module to be closed state │
                          Yes│◀─────────────────────────────────┘
                             ▼
        ┌────────────────────────────────────────────────────┐
        │ Water outlet nozzle supplies water in first water supply section │ ⌐ S110
        └────────────────────────────────────────────────────┘
                             │
                             ▼
        ┌────────────────────────────────────────┐
        │  Control dripper valve module to be open state  │ ⌐ S120
        └────────────────────────────────────────┘
                             │
                             ▼
        ┌────────────────────────────────────────────────────┐
        │ Water outlet nozzle supplies water in second water supply section │ ⌐ S130
        └────────────────────────────────────────────────────┘
                             │
                             ▼
        ┌────────────────────────────────────────┐
        │ Control dripper valve module to be closed state │ ⌐ S140
        └────────────────────────────────────────┘
                             │
                             ▼
        ┌────────────────────────────────────────────────────┐
        │ Dispose water outlet nozzle moving part at start position │ ⌐ S150
        └────────────────────────────────────────────────────┘
                             │
                             ▼
                          ( End )
```

[FIG. 17]

531

55

coffee powder
falling area

50a

[FIG. 18]

**[FIG. 19]**

(a)

(b)

[FIG. 20]

[FIG. 21]

EP 4 442 172 A1

## INTERNATIONAL SEARCH REPORT

| International application No. |
|---|
| **PCT/KR2021/018839** |

| A. | CLASSIFICATION OF SUBJECT MATTER |
|---|---|
| | **A47J 31/06**(2006.01)i; **A47J 31/46**(2006.01)i; **A47J 31/40**(2006.01)i; **A47J 31/44**(2006.01)i; **A47J 31/52**(2006.01)i |

According to International Patent Classification (IPC) or to both national classification and IPC

| B. | FIELDS SEARCHED |
|---|---|

Minimum documentation searched (classification system followed by classification symbols)

A47J 31/06(2006.01); A23F 5/24(2006.01); A47J 31/02(2006.01); A47J 31/44(2006.01); A47J 31/46(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 드리퍼(dripper), 드리퍼 밸브 모듈(dripper valve module), 추출홀(extraction hole), 드리퍼 베이스(dripper base), 드리퍼 캡(dripper cap), 커피 메이커(coffee maker)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2009-0317526 A1 (TACKLIND et al.) 24 December 2009 (2009-12-24)<br>See paragraph [0032] and figures 2B and 6. | 1-2,4,24 |
| Y | | 3,5-23 |
| Y | KR 10-2016-0082301 A (HURED INC.) 08 July 2016 (2016-07-08)<br>See paragraphs [0027]-[0033] and figures 1-5. | 3 |
| Y | KR 10-2316906 B1 (RC NET CO., LTD.) 25 October 2021 (2021-10-25)<br>See paragraphs [0002]-[0003]. | 5-6,20-23 |
| Y | KR 10-2021-0137749 A (LG ELECTRONICS INC.) 18 November 2021 (2021-11-18)<br>See paragraphs [0034]-[0068] and figures 1-11. | 7-19,21 |
| A | JP 3159877 U (TSUKADA, Yoshimichi) 03 June 2010 (2010-06-03)<br>See claim 1 and figure 1. | 1-24 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 August 2022** | **22 August 2022** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/018839**

| Patent document cited in search report | | | Publication date (day/month/year) | Patent family member(s) | | | Publication date (day/month/year) |
|---|---|---|---|---|---|---|---|
| US | 2009-0317526 | A1 | 24 December 2009 | None | | | |
| KR | 10-2016-0082301 | A | 08 July 2016 | None | | | |
| KR | 10-2316906 | B1 | 25 October 2021 | None | | | |
| KR | 10-2021-0137749 | A | 18 November 2021 | EP | 3909478 | A1 | 17 November 2021 |
| | | | | US | 2021-0345814 | A1 | 11 November 2021 |
| JP | 3159877 | U | 03 June 2010 | None | | | |

Form PCT/ISA/210 (patent family annex) (July 2019)

**REFERENCES CITED IN THE DESCRIPTION**

**Patent documents cited in the description**

- KR 101324817

- KR 101570162